# EUROPEAN PATENT APPLICATION

(11) **EP 4 803 168 A2**
(43) Date of publication of application: **09.09.2026**
(21) Application number: 26158320.7
(22) Date of filing: 12.02.2026
(51) Int. Cl.: A63F 13/493, A63F 13/67, A63F 13/79

(54) **AUTOMATIC PROGRESSION MOVEMENT IN INTERACTIVE GAMES**

(30) Priority: 13.02.2025 US 202563758185 P; 10.02.2026 US 202619535915
(71) Applicant: Skydance Silicon Valley, LLC, Santa Monica, California 90404 (US)
(72) Inventor: BEAK, Julian Anthony, Santa Monica, 90404 (US); RIDOUT, Ryan David, Santa Monica, 90404 (US)
(74) Representative: Gevers Patents

(57) **Abstract**

Systems and methods disclosed herein describe embodiments of an interactive game system utilizing a bi-directional timeline for automatic progression management. The system dynamically tracks player progress by recording actions, inventory, and environmental states without requiring manual save inputs. When a player exits, the system associates the current timeline location with the player profile. Upon re-entry, the game automatically resumes at that specific location, bypassing traditional title screens to simulate a seamless streaming experience. The system integrates pinch point logic to ensure mandatory narrative events are preserved during navigation. Furthermore, scrubbing logic enables players to move bi-directionally through the timeline to revisit past segments or advance to future content. The game engine dynamically reconstructs the game state at any selected point by applying delta variables to base assets. This configuration provides a fluid, personalized experience that maintains narrative integrity while offering players flexible control over their gameplay journey.

## Description

### PRIORITY

This application claims the benefit of, and priority to U.S. Patent Application No. 19/535,915 filed February 10, 2026 and U.S. Provisional Application, entitled "Automatic Progression Movement In Interactive Games," filed on February 13, 2025 and having application serial number 63/758,185, the entirety of each of said application being incorporated herein by reference.

### FIELD

The present disclosure relates to interactive games. More particularly, the present disclosure relates to utilizing a bi-directional timeline system with automatic progression management within an interactive game.

### BACKGROUND

Traditionally, video games have employed linear progression systems that require players to advance through a series of challenges, puzzles, or enemies in a specific, predetermined order. This structure is often designed to gradually increase in difficulty, ensuring that players master the mechanics and skills needed to succeed as they progress. Key milestones within this structure, such as boss fights or complex puzzles, serve as gatekeepers, testing a player's abilities before allowing them to move forward. While this approach can create a sense of accomplishment and immersion, it can also be restrictive, as it demands that players successfully complete each segment to unlock the next phase of the game. Consequently, those who encounter difficulty with particular segments may find themselves unable to proceed, often leading to frustration and, in some cases, abandonment of the game altogether.

This challenge becomes particularly pronounced when players are faced with especially demanding obstacles, such as formidable boss battles that require precise timing, strategy, or mastery of complex mechanics. Not all players have the same level of skill, experience, or time to devote to overcoming such hurdles, which can result in a disproportionate number of players being unable to progress past these barriers. Additionally, other factors, such as disabilities, age, available time, or simply personal preference for different game genres, may further hinder a player's ability to surmount these challenges. As a result, these traditional progression barriers can unintentionally exclude a sizeable segment of the potential player base, preventing them from accessing the full experience and enjoyment that the game has to offer, and making the game less marketable.

For game developers who are committed to delivering a rich, narrative-driven experience, this can be a significant concern. Many modern video games place a strong emphasis on storytelling, with intricate plots, complex characters, and detailed world-building that unfold as the player progresses through the game. When a player is unable to overcome a difficult section, they can miss out on crucial narrative elements, character development, and plot twists that the developers have painstakingly crafted. This not only diminishes the player's experience but also undermines the developer's intent to deliver a cohesive and impactful story. In such cases, the rigid nature of traditional progression can act as a barrier to fully engaging with the game's narrative, leaving players with an incomplete or fragmented understanding of the story, undermining the game developer's work and desires.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a video game ecosystem in accordance with various embodiments of the disclosure;
FIG. 2 is a conceptual block diagram of a device suitable for configuration with a timeline control logic, in accordance with various embodiments of the disclosure;
FIG. 3 is an abstract block diagram of the components of a timeline control system in accordance with various embodiments of the disclosure;
FIG. 4 is an abstract block diagram of the data within a storage of a timeline control system in accordance with various embodiments of the disclosure;
FIG. 5 is a conceptual illustration of starting an interactive game with automatic progression management in accordance with various embodiments of the disclosure;
FIG. 6 is a conceptual illustration of an exit prompt overlay within gameplay in accordance with various embodiments of the disclosure;
FIG. 7 is a conceptual illustration of an options screen within a bi-directional timeline interactive game in accordance with various embodiments of the disclosure;
FIG. 8 is a flowchart of a process for automatic game progression management and location association in accordance with various embodiments of the disclosure;
FIG. 9 is a diagram depicting various subsets of artificial intelligence in accordance with various embodiments of the disclosure;
FIG. 10 is a conceptual illustration of different methods of machine-based learning in accordance with various embodiments of the disclosure;
FIG. 11 is a conceptual illustration of a machine learning lifecycle in accordance with various embodiments of the disclosure;
FIG. 12 is an exemplary neural network for use in a player control system in accordance with various embodiments of the disclosure;
FIG. 13 is a flowchart of a process for detecting timeline scrubbing input and managing pinch point notifications in accordance with various embodiments of the disclosure;
FIG. 14 is a flowchart of a process for constructing a game state at a target timeline location based on player profile data in accordance with various embodiments of the disclosure; and
FIG. 15 is a flowchart of a process for generating an optimal restart location prediction using a trained machine learning model in accordance with various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the problems outlined above, embodiments of the disclosure described herein can utilize a bi-directional game system wherein the timeline can be triggered and utilized by a user to change the current game state to one previously played or one that has yet to occur. In a number of embodiments, a timeline system within an interactive game is configured as a feature that allows players to navigate through different moments of the game's narrative and gameplay, providing them with a greater sense of control over how they experience the story and challenges. This system may typically be presented as a visual timeline overlay that appears on the screen, often as a bar at the bottom or top, with markers indicating key events, cutscenes, gameplay milestones, and pivotal moments that the player has encountered or can access. Players can interact with this timeline by dragging a marker or scrubber forward or backward, allowing them to revisit past scenes, replay challenging segments, or skip ahead to future content that they might find more interesting or relevant. The timeline system can be especially useful for players who wish to retry sections to improve their performance, collect missed items, or explore different narrative choices without having to start the game from scratch.

In many embodiments, the timeline system can be integrated with various elements of the interactive game such as the game engine, asset management, and narrative progression to ensure that the experience remains seamless and immersive. As players move through the timeline, the system can interact with various logics such as, but not limited to, scrubbing logic, which can be configured to manage how the game's state is adjusted to reflect the exact moment the player has chosen. In additional embodiments, this can involve resetting character positions, events, enemy behaviors, and dialogue to match the conditions at that specific point, as well as loading or unloading necessary assets to ensure smooth transitions. Additionally, a pinch point logic can further be configured to ensure that key story events or gameplay moments that are crucial to the narrative are experienced by the player, even when they choose to jump around the timeline, preserving the integrity of the story and preventing players from accidentally missing important content.

Various embodiments of the timeline system described herein can also play a significant role in enhancing the overall accessibility and flexibility of the game. For players who may find certain segments too difficult, want to focus more on the narrative, or simply have limited time to invest, the ability to navigate through the timeline provides an option to engage with the game at their own pace. This feature can provide a game means to cater to a wide variety of player preferences, from those who enjoy perfecting their gameplay to those who are primarily interested in experiencing the story. By allowing players to control how they interact with different parts of the game, the timeline system can enrich the overall gaming experience, making it more personalized, dynamic, and inclusive, regardless of the player's skill level or play style.

In many embodiments, an automatic player progression system can be integrated within a timeline control system, which can be configured to provide a seamless, streamlined way for players to engage with interactive games without the need for manual save files, traditional title screens, or interruptions in their gaming experience. At its core, this system can track player progress dynamically, and allow a player to re-enter the game at the same point without having to manually select any options. In some embodiments, this can be done by ensuring that actions, events, and decisions made within the game are automatically recorded and associated with the player and/or at a specific point on the timeline. As players navigate the game, the system can capture data, such as character position, mission progress, unlocked items, and environmental states, without requiring the player to manually save their progress. This dynamic association with the game's timeline allows the player to leave the game at any point and return to exactly where they left off without the hassle of navigating menus or save files.

In a number of embodiments, when a player chooses to exit the game, they may do so by triggering an in-game menu or selecting an option that prompts them with a confirmation message. Once the player confirms, the system may in certain embodiments quickly record the current state on the timeline, effectively bookmarking their progress. However, in some embodiments, no specific actions can be taken, such as in the event of a crash, and other means of re-establishing gameplay can occur.

Often, this process can happen in the background, so the player doesn't need to worry about managing save slots or remembering to save before quitting. In some embodiments, the game engine can capture the exact state of the game world, including variables like enemy positions, items collected, dialogue choices, and active quests, and ensure that all of this data is stored in association with the player's profile. In various embodiments, the game engine can construct the last known location of the player by examining associated data such as, but not limited to, current unlocked items, previously downloaded assets (indicating the player made it to that area, etc.), and/or data still in memory from the last playthrough, etc. This automated progression system can create a fluid experience that mirrors the ease of a streaming service, where resuming content is as simple as pressing play.

Upon exiting, the game can transition smoothly to the game selection screen, where the player is presented with a list of available games. In some embodiments games utilizing the bi-directional timeline system can be visually represented in the game icon, such as with its associated timeline or current event showing where the player last left off. Upon selecting the game, instead of going to a traditional title screen or player/save game select screen, the interactive game can instead head straight back into the game at the last location played by the player. This can eliminate the need for a traditional title screen or save file selection, offering a more integrated and cinematic experience. When the player selects a game from this list, the system can recall or otherwise determine the associated timeline location last played and instantly load the game at the exact moment they last played (or a nearby point in case of expositional or logistical needs), complete with all the relevant in-game states restored. This process can ensure that the player can jump back into the action, whether it's resuming a cutscene, continuing an action-packed boss fight, or revisiting an exploration segment, all without any interruptions.

The dynamic timeline system can also provide flexibility in how players interact with their games. Because all progress is tied to the timeline, players can use this feature to move forward or backward within the game, allowing them to revisit previous scenes, retry challenging segments, or skip ahead if they're more interested in advancing the story. This level of control, paired with the automatic progression system, transforms how players engage with games by offering a personalized, seamless experience similar to how players consume other forms of media. It can reduce the friction of traditional game management while enhancing the player's freedom to explore, experiment, and re-engage with the game at their own pace, while offering a more welcoming environment to new and/or re-engaged game players. The overall result is a gaming experience that is both immersive and intuitive, where the technical aspects of progression management fade into the background, letting the player focus solely on the gameplay and story.

Often a pinch point can be understood as a specific moment or event within an interactive narrative structure where all potential gameplay paths and player choices must converge into a single, mandatory experience. Unlike open-world exploration or branching dialogue trees where players may experience vastly different content, a pinch point serves as a narrative bottleneck designed to ensure that every user receives critical information or experiences a pivotal plot development before moving forward. These moments are strategically placed by developers to maintain the coherence of the storyline, ensuring that regardless of how a player arrived at that moment, they depart with the same foundational knowledge required for the subsequent acts of the game.

In the context of a timeline control system, pinch points function as immutable anchors that govern the rules of navigation and scrubbing. While a player might be free to jump between voluntary side quests or exploration segments, the system logic often treats pinch points as protected segments that cannot be bypassed without explicit acknowledgement or warning. This distinction is vital for maintaining the integrity of the user experience, as it prevents players from inadvertently skipping over essential tutorials, key character introductions, or major plot twists that would render the remaining game confusing or unplayable.

In various embodiments, timeline scrubbing refers to the interactive process by which a user navigates through the chronological history of their gameplay session, moving bi-directionally to revisit past states or jump to future unlocked points. This mechanic effectively translates the familiar concept of seeking through a video or audio stream into the complex environment of a real-time game engine. Unlike linear media where the future content is static and pre-recorded, scrubbing in a game environment requires the system to present potential jump points based on the player's unique progression history, allowing them to visualize where they have been and where they are eligible to go.

The technical execution of timeline scrubbing involves far more than simply changing the visual frame on the screen; it requires the rapid serialization and deserialization of complex logic states. When a player actively scrubs through the timeline, the system must dynamically preview the state of the world at various intervals, often switching between high-density granularity for precise moments, like cutscenes, and low-density granularity for general gameplay segments. This allows the player to find a specific moment, such as the instant before a failed boss encounter, and re-enter the simulation exactly at that point with all variables restored to their previous conditions.

Those skilled in the art will recognize that a game state comprises the totality of all variables, data structures, and object properties that define the interactive environment at a precise instance in time. This includes not only the obvious visual elements, such as the player character's location, current health, and equipped items, but also the invisible background data, such as the current artificial intelligence behaviors of enemies, the status of active quests, weather simulation cycles, and the physics state of movable objects. In traditional gaming, this state is usually only preserved when a player reaches a checkpoint or manually saves the file.

However, within an automatic progression management system, the game state is treated as a fluid, continuously tracked entity rather than a series of static snapshots. The system deconstructs the game state into modular components that can be independently loaded or modified, allowing the engine to reconstruct a specific moment on the timeline by layering dynamic player data over the static base assets of the level. This granular approach to defining the game state allows for the seamless resumption of gameplay without the need for cumbersome loading screens or manual file management, mimicking the immediacy of streaming media.

In many embodiments, delta variables represent the specific subset of data that tracks the changes a player has made to the game world relative to a default or base state. Instead of saving the entire state of the world every second, which would be computationally expensive and storage-intensive, the system records only the differences, or deltas, that occur as the player interacts with the environment. For example, if a player enters a room and defeats two out of five enemies and consumes one health potion, the delta variables would record the elimination of those specific enemy entities and the reduction in inventory count, while relying on the static level data to define the room's geometry and lighting.

The utilization of delta variables is critical for the efficiency of a bi-directional timeline system, as it allows the game to quickly calculate and apply the necessary changes to recreate any specific point in the player's history. When a player jumps to a target location, the engine loads the base assets for that scene and then sequentially applies the relevant delta variables to fast-forward the world state to the desired condition. This method ensures that the restored game world accurately reflects the player's unique journey and decisions, preserving the consequences of their actions even after navigating backward or forward through time.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system.". Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C.". An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

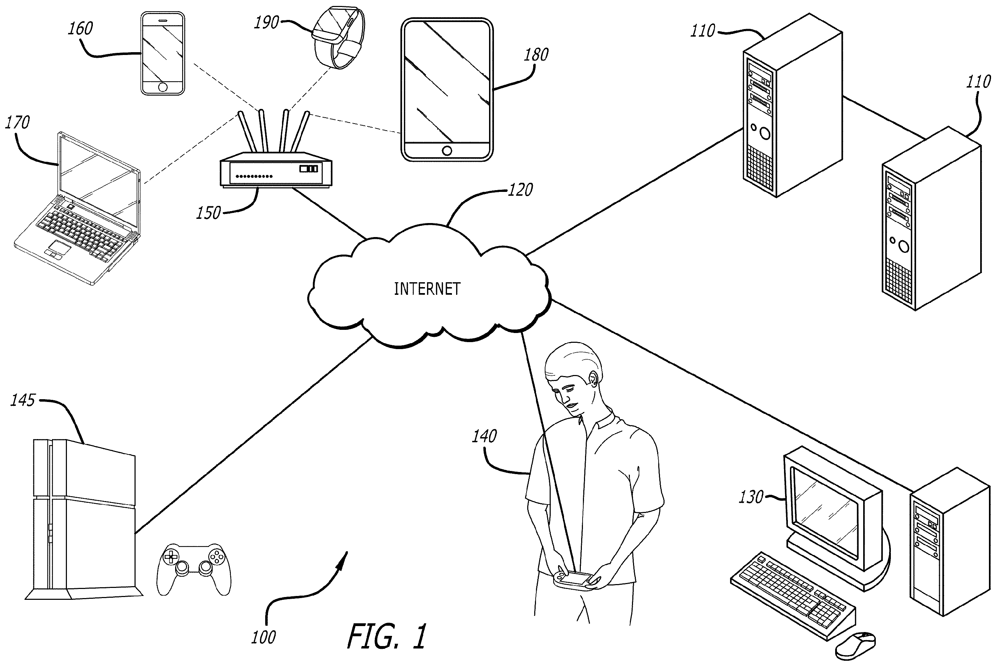

Referring to FIG. 1, a video game ecosystem 100 in accordance with various embodiments of the disclosure is shown. In many embodiments, the game can be designed to seamlessly integrate and function across various devices, including servers 110, home gaming consoles 145, mobile gaming consoles 140, laptops 170, personal computers 130, tablets 180, smartphones 160, wearable devices 190, and more. This integration can ensure a consistent and optimized gaming experience, regardless of the device being used.

In some embodiments, the game can be developed using a modular architecture, enabling compatibility and scalability across multiple platforms. The core game logic, assets, and the timeline control system may be abstracted into platform-agnostic modules. These modules can be encapsulated in a game engine designed to handle platform-specific requirements dynamically. As those skilled in the art will recognize, certain embodiments, such as games that require a client/server relationship may require one or more aspects of the game to be processed server-side in one or more of the servers 110.

In a number of embodiments, distribution of the game across the various platforms may leverage cloud-based infrastructure, enabling seamless delivery of game content to end-users. Upon release, the game can be hosted on central servers 110 equipped with, or working in conjunction with, content delivery networks (CDNs) to minimize latency and ensure quick access. Players may download the game client tailored to their specific device. For home gaming consoles and personal computers, distribution can be through established digital storefronts, such as the PlayStation Network, Xbox Live, Steam, and others. Mobile and tablet versions may be available via app stores like Google Play and Apple's App Store. Additionally, wearable devices and newer platforms can access the game through dedicated portals or companion apps.

In various embodiments, upon installation, the game may communicate with central servers 110 to authenticate users, sync progress, and manage in-game assets. In some embodiments, for instance, on higher-performance home gaming consoles 145 and PCs 130, the game may provide high-resolution, dynamic range views with advanced effects like depth of field and motion blur. On mobile devices and tablets, the timeline control system can optimize for performance, ensuring smooth gameplay while maintaining visual fidelity.

Certain embodiments of the ecosystem 100 may allow for cross-platform play, allowing users to interact and play together regardless of the device they are using. This architecture can support this by maintaining a unified player database and real-time synchronization of game states. In various embodiments, the timeline control system can adjust its parameters, scores, or views based on the device in use or the current state of other players within the online game, ensuring a consistent gameplay experience.

In more embodiments, updates can be distributed through the same channels as the original game, ensuring that all devices receive the latest features, bug fixes, and improvements simultaneously. The timeline control system and any associated logic, being a part of the gameplay experience, may also receive regular updates and telemetry data to enhance functionality and performance based on user feedback and advancements in technology.

In additional embodiments, the ecosystem 100 can include one or more servers 110 that can play a role in ensuring smooth operation, synchronization, and management of the game across various devices. The server 110 can be configured to handle various operations such as, but not limited to, user authentication, ensuring that only legitimate users can access the game. This process may involve verifying login credentials and managing user sessions. Additionally, the server 110 can manage authorization, determining what resources and features each user is permitted to access based on their account type and progress within the game.

In further embodiments, the server 110 can maintain the game's overall state, ensuring consistency and synchronization across all connected devices. This may involve tracking player progress, in-game events, and real-time interactions. For multiplayer scenarios, the server 110 can ensure that all players experience the same game state, coordinating actions and updates to maintain a seamless multiplayer experience.

In still more embodiments, servers 110 can be responsible for delivering game content, including initial game files, updates, patches, and downloadable content (DLC). They may utilize content delivery networks (CDNs) to distribute these files efficiently, reducing latency and ensuring that players can quickly access and download necessary game data. In multiplayer games, the server 110 can manage matchmaking, pairing players based on their skill levels, preferences, and other criteria. Once matched, the server 110 may establish and manage game sessions, ensuring that players are connected to the appropriate game instances and maintaining the integrity of these sessions.

The server 110 may also be configured to store and manages all necessary game data, including user profiles, game progress, leaderboards, and in-game statistics. This data can be stored in secure databases and accessed and updated as needed to reflect players' actions and achievements within the game. To maintain a fair gaming environment, various embodiments of the server 110 can implement security measures and anti-cheat systems. These measures can be configured to detect and prevent unauthorized modifications, hacks, or exploits that could disrupt the game's balance or give certain players unfair advantages.

Servers 110 can also collect and analyze data related to game performance, user behavior, and system health. This information may be used to monitor the game's performance, identify and address issues, and inform future updates and improvements. Analytics can also help in understanding player engagement and preferences, guiding the development of new features and content. In yet additional embodiments, the server 110 can facilitate social features, such as friend lists, messaging, and in-game communities. It can sometimes manage interactions between players, supports communication channels, and ensures that social features are integrated seamlessly into the gaming experience. To handle varying numbers of concurrent players, the server 110 can be designed to have a scalable infrastructure. This may include utilizing load balancing techniques to distribute the workload evenly across multiple servers, ensuring consistent performance and preventing any single server from becoming a bottleneck.

In many embodiments, the ecosystem 100 may utilize the internet 120 and wireless network devices like routers 150 to efficiently deliver data across various devices, ensuring seamless connectivity and gameplay. For wireless devices, such as mobile gaming consoles 140, tablets 180, and wearable devices 190, the router 150 can provide Wi-Fi connectivity. Modern routers support high-speed wireless standards like Wi-Fi 6, which offer faster data rates, lower latency, and improved handling of multiple devices simultaneously. This can ensure a stable and efficient connection for gaming, even in households with numerous connected devices.

As the game operates, data packets are transmitted between the player's device and the servers 110. These packets may include user inputs, game state updates, and synchronization data. The router 150 can handle the routing of these packets, directing them to their destination through the internet. Advanced Quality of Service (QoS) settings on routers can prioritize gaming traffic to ensure minimal latency and reduced lag, enhancing the gaming experience. During multiplayer sessions, the router 150 can play a role in maintaining a stable connection. It manages data traffic between multiple players, ensuring that game state updates and player interactions are synchronized in real-time. The ecosystem 100 can also be configured to utilize peer-to-peer (P2P) networking in conjunction with traditional client-server models. In P2P setups, game data may be shared directly between players' devices, reducing the load on central servers and improving data transfer speeds. The router 150 can, in certain embodiments, facilitate these direct connections, ensuring that data packets are correctly routed between peers.

In a number of embodiments, a PC 130 can download the game/game client from a digital storefront from one or more servers 110. Once installed, the game client can connect to the game's servers 110 via the internet 120, authenticating the user and syncing their game data. In certain embodiments, the PC 130 can also interact with other devices in the ecosystem 100. For example, a player might use a mobile app on their tablet 180 or smartphone 160 to manage their game inventory or chat with friends while playing on their PC 130. These interactions can be facilitated by one or more servers 110, which can synchronize data across all connected devices, ensuring a unified and cohesive gaming experience.

As those skilled in the art will recognize, home gaming consoles 145 are often specifically designed for gaming, providing a consistent and optimized experience without the need for extensive configuration. In various embodiments, home gaming consoles 145 frequently include social and community features that are tightly integrated into the ecosystem 100. Players can easily add friends, join parties, and communicate through voice or text chat. Additionally, game content distribution on home gaming consoles 145 often involves digital storefronts. In additional embodiments, consoles are designed to work seamlessly with various peripherals and accessories, such as controllers, headsets, and virtual reality (VR) devices.

In further embodiments, a mobile gaming console 140 has a design emphasizing portability, featuring a compact form factor, built-in display, and rechargeable battery. This allows players to continue their gaming sessions seamlessly when moving between different locations. In various embodiments, the game client and associated game logic on the mobile gaming console is optimized to handle the specific hardware and connectivity characteristics of these devices, ensuring smooth performance and efficient battery usage.

The mobile gaming console 140 can also connect to other devices through companion apps or cloud gaming services. For example, a player might use a mobile app on their console 140 to manage in-game items or communicate with friends, synchronizing this data with their main game profile on the servers 110. In certain embodiments, cloud gaming services can allow the mobile gaming console 140 to stream games from powerful servers 110, bypassing the need for high-end local hardware and ensuring access to graphically intensive games that would otherwise be beyond the device's capabilities.

Furthermore, mobile gaming consoles 140 can often support local multiplayer gaming through ad-hoc networks or Bluetooth connections. This may allow players to connect directly with other nearby mobile gaming consoles 140 for shared gaming experiences without relying solely on the internet. The servers 110 can then sync any local multiplayer progress with the broader ecosystem 100 once the devices reconnect to the internet 120.

Unlike stationary PCs 130, laptops 170, can be used in various environments, from home to public spaces. Many gaming laptops 170 come with dedicated GPUs, allowing for high-quality graphics and smooth gameplay. Laptops 170 may also support various peripheral connections, including external displays, gaming controllers, and VR headsets, expanding their gaming capabilities.

In more embodiments, smartphones 160 can offer unique features like GPS, accelerometers, gyroscopes, and cameras, which can be integrated into gameplay to provide augmented reality (AR) experiences and location-based gaming. Touchscreens are often standard on smartphones 160, facilitating intuitive controls and gestures. The ubiquity of smartphones 160 can ensure that players can engage with the game ecosystem wherever they are, and mobile-specific features like notifications keep players connected to in-game events and updates. Additionally, smartphones 160 may often include biometric security features such as fingerprint scanners and facial recognition, enhancing secure access to game accounts and in-game purchases.

In numerous embodiments, wearable devices 190, such as, but not limited to, smartwatches and AR glasses, can add a layer of interaction that extends beyond traditional gaming platforms. These devices can provide real-time notifications, health tracking, and context-sensitive interactions based on the player's environment. For example, a smartwatch might track physical activity during a fitness game, providing feedback and integrating physical activity into the gaming experience. In another example, AR glasses can overlay game elements onto the real world, creating immersive and interactive experiences that blend reality with the virtual game environment. Wearable devices 190 may also enable continuous engagement with the ecosystem 100 through haptic feedback and voice commands, allowing players to interact without needing to look at a screen.

In still more embodiments, tablets 180 can offer a larger screen size than smartphones while maintaining portability, making them ideal for immersive gameplay on the go. Tablets 180 may be configured to support both touch and stylus input, providing precise control options for games that require fine-tuned interactions. They may also be excellent for split-screen or multi-window functionality, enabling players to run multiple apps simultaneously, such as a game and a companion app. Tablets 180 can easily connect to external peripherals like keyboards and game controllers, bridging the gap between mobile and traditional gaming setups.

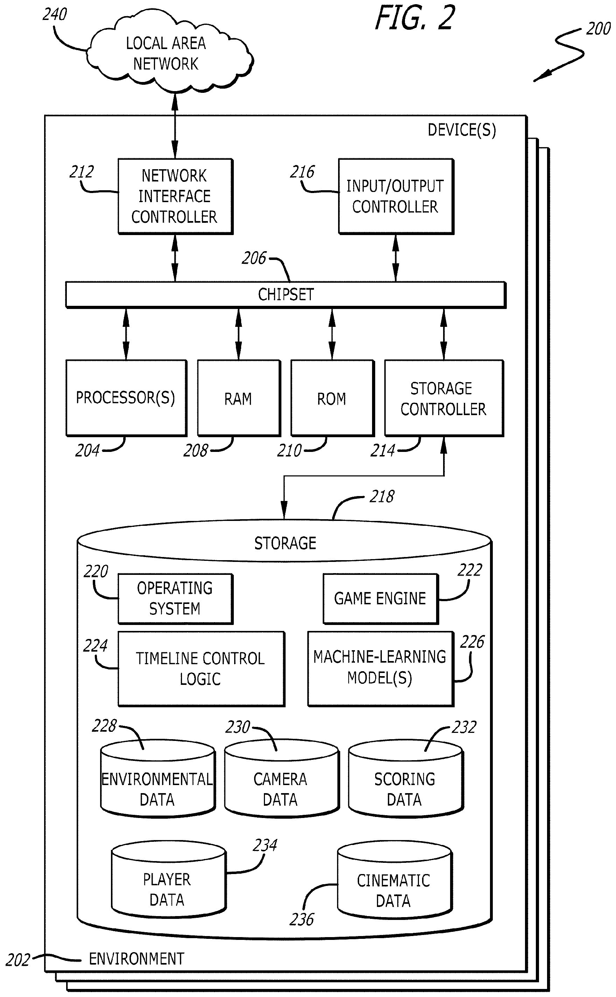

Although a specific embodiment for a video game ecosystem 100 is described above with respect to FIG. 1, any of a variety of systems and/or processes may be utilized in accordance with embodiments of the disclosure. For example, the video game ecosystem 100 may be configured into any number of various network topologies including different types of interconnected devices and user devices. The elements depicted in FIG. 1 may also be interchangeable with other elements of FIGS. 2-16 as required to realize a particularly desired embodiment.

Referring to FIG. 2, a conceptual block diagram of a device 200 suitable for configuration with a timeline control logic 224, in accordance with various embodiments of the disclosure is shown. The embodiment of the conceptual block diagram depicted in FIG. 2 can illustrate a conventional game device, personal computer, mobile game device, game server, laptop, tablet, network appliance, e-reader, smartphone, wearable device, or other computing device, and can be utilized to execute any of the application and/or logic components presented herein. The device 200 may, in many non-limiting examples, correspond to physical devices or to virtual resources described herein.

In many embodiments, the device 200 may include an environment 202 such as a baseboard or "motherboard," in physical embodiments that can be configured as a printed circuit board with a multitude of components or devices connected by way of a system bus or other electrical communication paths. Conceptually, in virtualized embodiments, the environment 202 may be a virtual environment that encompasses and executes the remaining components and resources of the device 200. In more embodiments, one or more processors 204, such as, but not limited to, central processing units ("CPUs") can be configured to operate in conjunction with a chipset 206. The processor(s) 204 can be standard programmable CPUs that perform arithmetic and logical operations necessary for the operation of the device 200.

In a number of embodiments, the processor(s) 204 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 206 may provide an interface between the processor(s) 204 and the remainder of the components and devices within the environment 202. The device 200 can incorporate different types of processors to enhance performance and efficiency across various tasks. A central processing unit (CPU) can handle primary processing tasks such as game logic, AI, and player inputs, while a graphics processing unit (GPU) can be specialized for rendering high-resolution graphics and visual effects. Digital signal processors (DSPs) may manage audio processing, delivering high-quality sound without burdening the CPU. In portable devices, systems on a chip (SoCs) can be configured to integrate the CPU, GPU, memory, and peripherals to balance performance and efficiency. In some embodiments, application-specific integrated circuits (ASICs) can optimize specific functions like cryptographic processing, while neural processing units (NPUs) accelerate AI and machine learning tasks. Some high-end devices may also include physics processing units (PPUs) to handle complex physics calculations, further enhancing the realism and responsiveness of the gaming experience. However, those skilled in the art will recognize that the device 200 can any variety or combination of processor(s) 204 as needed to satisfy the desired application.

The chipset 206 can provide an interface to a random-access memory ("RAM") 208, which can be used as the main memory in the device 200 in some embodiments. The chipset 206 can further be configured to provide an interface to a computer-readable storage medium such as a read-only memory ("ROM") 210 or non-volatile RAM ("NVRAM") for storing basic routines that can help with various tasks such as, but not limited to, starting up the device 200 and/or transferring information between the various components and devices. The ROM 210 or NVRAM can also store other application components necessary for the operation of the device 200 in accordance with various embodiments described herein.

Additional embodiments of the device 200 can be configured to operate in a networked environment using logical connections to remote computing devices and computer systems through a network, such as the local area network 240. The chipset 206 can include functionality for providing network connectivity through a network interface controller ("NIC") 212, which may comprise a gigabit Ethernet adapter or similar component. The NIC 212 can be capable of connecting the device 200 to other devices over the local area network 240. It is contemplated that multiple NICs 212 may be present in the device 200, connecting the device to other types of networks and remote systems, such as the Internet.

In further embodiments, the device 200 can be connected to a storage 218 that provides non-volatile storage for data accessible by the device 200. The storage 218 can, for instance, store an operating system 220, and/or game engine 222. In various embodiments, the storage 218 can be connected to the environment 202 through a storage controller 214 connected to the chipset 206. In certain embodiments, the storage 218 can consist of one or more physical storage units. The storage controller 214 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

In additional embodiments, the device 200 can store data within the storage 218 by transforming the physical state of the physical storage units to reflect the information being stored. The specific transformation of physical state can depend on various factors. Examples of such factors can include, but are not limited to, the technology used to implement the physical storage units, whether the storage 218 is characterized as primary or secondary storage, and the like.

In many more embodiments, the device 200 can store information within the storage 218 by issuing instructions through the storage controller 214 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. In some embodiments, the device 200 can further read or access information from the storage 218 by detecting the physical states or characteristics of one or more particular locations within the physical storage units.

In addition to the storage 218 described above, certain embodiments of the device 200 may also have access to other computer-readable storage media to store and retrieve information, such as program modules, data structures, or other data. It should be appreciated by those skilled in the art that computer-readable storage media is any available media that provides for the non-transitory storage of data and that can be accessed by the device 200. In some examples, operations performed by a cloud computing network, and or any components included therein, may be supported by one or more devices similar to device 200. Stated otherwise, some or all of the operations performed by the cloud computing network, and or any components included therein, may be performed by one or more devices 200 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 218 can store an operating system 220 utilized to control the operation of the device 200. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 218 can store other system or application programs and data utilized by the device 200.

In many additional embodiments, the storage 218 or other computer-readable storage media is encoded with computer-executable instructions which, when loaded into the device 200, may transform it from a general-purpose computing system into a special-purpose computer capable of implementing the embodiments described herein. These computer-executable instructions m
ay be stored as application and transform the device 200 by specifying how the processor(s) 204 can transition between states, as described above. In some embodiments, the device 200 has access to computer-readable storage media storing computer-executable instructions which, when executed by the device 200, perform the various processes described above with regard to FIGS. 1 and 3-16. In certain embodiments, the device 200 can also include computer-readable storage media having instructions stored thereupon for performing any of the other computer-implemented operations described herein.

In a number of embodiments, the device 200 can store a game engine 222 in storage 218 and load it when the game is launched, enabling quick access and execution. The game engine 222 can manage core tasks such as rendering graphics, processing inputs, handling physics calculations, and managing audio by leveraging the device's CPU, GPU, and other hardware components. It can abstract hardware complexities to ensure smooth gameplay and real-time interaction. Additionally, in various embodiments, the game engine 222 cam facilitate network communications for multiplayer interactions and supports cross-platform functionality, allowing games to run efficiently on various devices within the available game ecosystem.

In many further embodiments, the device 200 may include a full control timeline control logic 224. The timeline control logic 224 can be configured to perform one or more of the various steps, processes, operations, and/or other methods that are described above. Often, the timeline control logic 224 can be a set of instructions stored within a non-volatile memory that, when executed by the processor(s)/controller(s) 204 can carry out these steps, etc. In some embodiments, the timeline control logic 224 may be a client application that resides on a network-connected device, such as, but not limited to, a server, switch, personal or mobile computing device in a single or distributed arrangement.

In some embodiments, pinch point data 228 can serve as an element within an interactive game system, enabling the game to manage and present key narrative moments that all players encounter, such as cutscenes or pivotal story events. This data can be processed to create a more dynamic and tailored experience for each player. For example, timeline data associated with a pinch point may denote precisely where the event occurs within the overall game structure, allowing the system to track a player's progress and ensure that they experience essential story elements in the correct sequence. Keyframe data linked to the pinch point provides information about the animation frames that are triggered during these moments, ensuring smooth and accurate playback of visual elements that are critical to the narrative. Additionally, prompt data can be used to determine how and when to prompt the player about their choices concerning the timeline feature, such as verifying if they wish to revisit or skip ahead through specific pinch points. This can allow for seamless integration of player agency while ensuring they do not miss vital aspects of the story. Display data, on the other hand, may dictate how these narrative elements should be presented, such as positioning, scaling, or layering of visual components during a pinch point, to enhance immersion and storytelling.

In more embodiments, event data 230 can play a role in enriching the interactive experience during pinch points by providing detailed information about the events that unfold within these critical narrative moments. One aspect of event data 230 is story moment data, which can mark specific plot points that are essential for understanding the game's overall story. These story moments serve as anchor points that guide the player through the narrative, ensuring they grasp the key themes, character motivations, and story developments. By tracking and processing story moment data, the game can highlight these pivotal events within a pinch point, allowing players to experience the storyline in a coherent and engaging manner, regardless of their skill level or progression path. In addition to story moment data, event data 230 may also encompass injection moment data, which refers to instances where ads, announcements, or other materials can be injected into the game at certain points, often dynamically or based on real-world events. This type of data may enable the game to adapt to external influences, such as promoting in-game events, sales, or even delivering real-time updates that enhance the sense of immersion. Finally, focus moment data can form a critical component of event data by identifying segments within a pinch point that require the player's attention to fully comprehend the narrative, such as crucial dialogues, visual cues, or interactions with the environment.

In various embodiments, cutscene data 232 is utilized to manage how narrative-driven moments are presented to players, ensuring that these sequences are both engaging and seamlessly integrated into the gameplay experience. One key aspect of this data is cutscene timing data, which controls the precise timing and sequencing of cutscenes, dictating when they begin, how long they last, and how they transition into and out of gameplay. This ensures that the storytelling flows naturally, maintaining the player's immersion while advancing the plot at appropriate moments. Keyframe data further enriches the cutscene by directing the exact frames of animation, enabling smooth and visually appealing transitions between movements, expressions, and camera angles within the cutscene, thereby enhancing the storytelling quality. Another aspect is cosmetic variable data, which accounts for changes made by the player to their avatar or other in-game assets. This data can ensure that any customizations, such as altered outfits or weapon skins, can be accurately reflected within the cutscene, creating a more personalized and cohesive experience. Scrubbing location data may identify optimal points within the cutscene where playback can be paused or resumed when players are scrubbing through the timeline, ensuring that the cutscene can be restarted smoothly without disrupting the flow of the narrative. Lastly, game engine handling data provides instructions to the game engine on how to manage the playback and restart of assets and animations within a cutscene, allowing for dynamic adjustment of elements such as lighting, physics, or character positioning. This ensures that cutscenes are rendered accurately and consistently, regardless of where they are paused or resumed, preserving the integrity of the storytelling and the overall game experience.

In various embodiments, player data 234 can serve as a valuable resource in personalizing the gaming experience, allowing the game to adapt to the individual needs, preferences, and progression of each player. One aspect of this is progression history data, which can track how far the player has advanced through the game and what content they have already experienced. This information can be utilized when presenting a timeline, as it helps determine whether certain story elements or potential spoilers should be revealed. For example, if a player has only reached a certain point in the game, the system can prevent them from accidentally jumping ahead to key story moments they have not yet encountered, unless a prompt is approved by the player. Furthermore, this historical data can guide when a timeline option should be offered, as well as which specific points are suitable for scrubbing, ensuring the player remains engaged without compromising the intended narrative flow. Player type data can be another component that helps tailor the timeline experience based on the player's preferred style of gameplay. This data might indicate whether the player is aiming for a completionist playthrough, a speedrun, or simply wants to focus on the narrative, allowing the game to adjust the timeline's features and functionality accordingly. For instance, a player interested in experiencing the story might benefit from a timeline that highlights narrative pinch points, while a speed runner may prefer a timeline that allows for quick navigation to allowed or sanctioned gameplay segments without unduly or accidentally skipping necessary parts. Additionally, player preferences data can capture information about the desired difficulty level and timeline behavior, enabling the system to adjust elements such as challenge levels, cutscene pacing, or how much control the player has over timeline navigation.

In still more embodiments, game scene data 236 can play a crucial role in managing the various elements that make up both cutscenes and gameplay scenes within an interactive game, ensuring a cohesive and engaging experience. One component of this data can be scene timing data, which orchestrates the timing of different events and actions, dictating how they interrelate within the game world. This can ensure that events occur in a logical sequence, whether during a fast-paced combat scenario or a narrative-driven cutscene, allowing for a seamless transition between gameplay and story moments. Asset data, on the other hand, defines all the individual assets, such as characters, props, environmental elements, and visual effects, that are required for each scene. By managing asset data effectively, the game can ensure that every element is present and accounted for, contributing to a rich and immersive experience. Staging data can further refine this process by providing detailed instructions on the placement and arrangement of these assets within a specific gameplay area or cutscene. This may allow the game to set up scenes with precise positioning, ensuring that characters, objects, and environmental details are accurately situated to create a visually appealing and coherent world. Loading data can also play a significant role by managing how and when different assets are loaded into the scene, optimizing performance and minimizing loading times to maintain the flow of the game. Finally, scoring data can track how various events, actions, or items are scored throughout gameplay, ensuring that players are appropriately rewarded for their actions, even when they choose to navigate through the timeline to skip or revisit certain scenes.

In still further embodiments, the device 200 can also include one or more input/output controllers 216 for receiving and processing input from a number of input devices, such as a keyboard, a mouse, a touchpad, a touch screen, an electronic stylus, or other type of input device. Similarly, an input/output controller 216 can be configured to provide output to a display, such as a computer monitor, a flat panel display, a digital projector, a printer, or other type of output device. Those skilled in the art will recognize that the device 200 might not include all of the components shown in FIG. 2 and can include other components that are not explicitly shown in FIG. 2 or might utilize an architecture completely different than that shown in FIG. 2.

As described above, the device 200 may support a virtualization layer, such as one or more virtual resources executing on the device 200. In some examples, the virtualization layer may be supported by a hypervisor that provides one or more virtual machines running on the device 200 to perform functions described herein. The virtualization layer may generally support a virtual resource that performs at least a portion of the techniques described herein.

Finally, in numerous additional embodiments, data may be processed into a format usable by one or more machine-learning models 226 (e.g., feature vectors), and or other pre-processing techniques. The machine-learning ("ML") models 226 may be any type of ML model, such as supervised models, reinforcement models, and/or unsupervised models. The ML models 226 may include one or more of linear regression models, logistic regression models, decision trees, Naïve Bayes models, neural networks, k-means cluster models, random forest models, and/or other types of ML models 226.

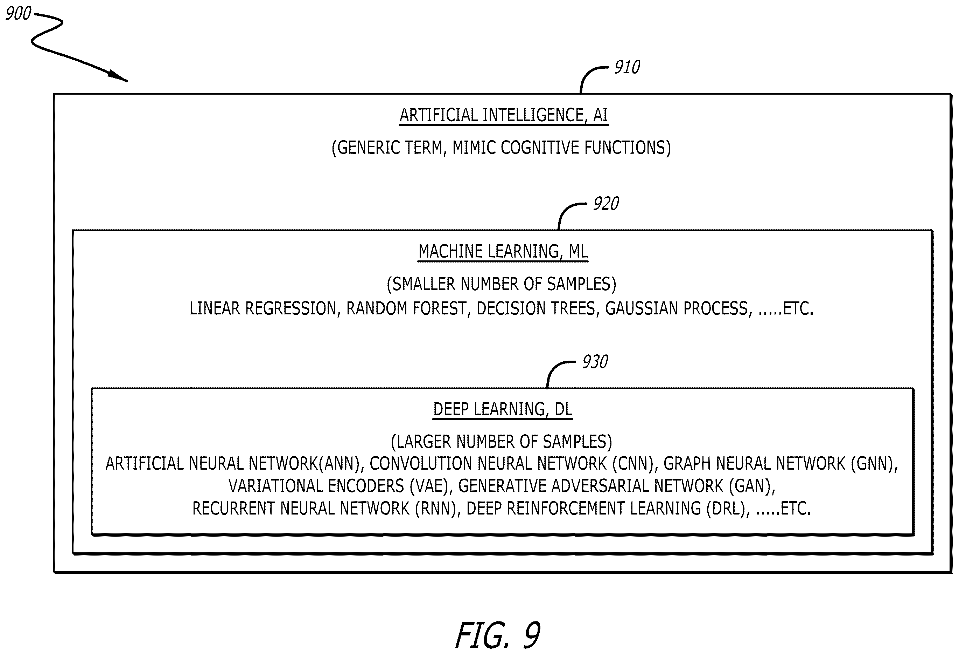

The ML model(s) 226 can be configured to generate inferences to make predictions or draw conclusions from data. An inference can be considered the output of a process of applying a model to new data. This can occur by learning from at least the pinch point data 228, event data 230, cutscene data 232, player data 234, and/or game scene data 236. These predictions can be based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a set of coordinates within a three-dimensional space, a probability distribution, a set of labels/characteristics/parameters, a decision about an action to take, etc. Ground truth for the ML model(s) 226 may be generated by human/administrator verifications or may compare predicted outcomes with actual outcomes. Further embodiments of AI and ML-based solutions are within the discussion of FIGS. 9-12.

Although a specific embodiment for a conceptual block diagram of a device suitable for configuration with a timeline control logic suitable for carrying out the various steps, processes, methods, and operations described herein is discussed with respect to FIG. 2, any of a variety of systems and/or processes may be utilized in accordance with embodiments of the disclosure. For example, the device 200 may be in a virtual environment such as a cloud-based game administration environment, or it may be distributed across a variety of network devices or servers. The elements depicted in FIG. 2 may also be interchangeable with other elements of FIGS. 1 and 3-16 as required to realize a particularly desired embodiment.

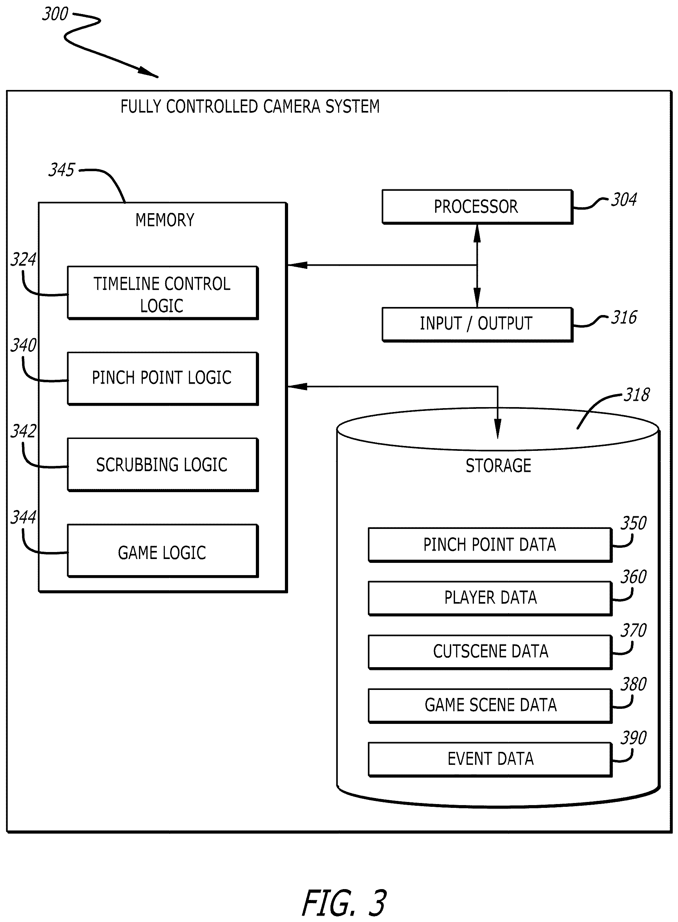

Referring to FIG. 3, an abstract block diagram of the components of a timeline control game system 300 in accordance with various embodiments of the disclosure is shown. In many embodiments, the timeline control game system 300 can be configured to include at least one or more processors 304, input/output functionality 316, a storage 318 as well as a memory 345 configured for executing one or more various logics. Specifically in the embodiment depicted in FIG. 3, the memory 345 comprises a timeline control logic 324 as well as a pinch point logic 340, scrubbing logic 342, and a game logic 344. Similarly, the storage 318 may comprise pinch point data 350, player data 360, cutscene data 370, game scene data 380, and event data 390.

In some embodiments, the timeline control logic 324 can facilitate the use of a timeline system within a video game. In certain embodiments, the timeline control logic 324 can work in conjunction with various other logics, such as a pinch point logic 340, scrubbing logic 342 and game logic 344. These logics may be configured as separate logics or may be interconnected or packaged/executed as a single logic.

In many embodiments, a pinch point logic 340 within the timeline system serves as a crucial mechanism that ensures players encounter and experience essential narrative and gameplay moments, even when they use the timeline to navigate forward or backward through the game. In certain embodiments, this logic can be designed to recognize key convergence points where all players typically pass through regardless of their chosen path and manage how the game transitions in and out of these moments to maintain the integrity of the story and gameplay. In some embodiments, when a player attempts to scrub past a pinch point, the pinch point logic 340 may prompt them with a notification, allowing them to either engage with the event or be reminded of its significance in the overall narrative. This can ensure that even if players choose to skip over certain sections, they are still made aware of critical story developments, plot twists, or important gameplay tutorials that are necessary for understanding the game. Additionally, the pinch point logic 340 can dynamically adjust how cutscenes, dialogue, and other narrative elements are presented, ensuring that these elements are reintroduced or highlighted whenever a player revisits or jumps to these points on the timeline. This can prevent inconsistencies, missed story elements, or disjointed gameplay experiences, ensuring that the narrative remains cohesive and that pivotal moments are experienced as intended.

In a number of embodiments scrubbing logic 342 within a timeline system can play a role in managing how the game responds when a player moves forward or backward through the timeline, ensuring a smooth, consistent, and immersive experience. This logic can be responsible for determining how various elements of the game, such as animations, events, dialogues, and asset loading, are handled as the player scrubs to different points within the game's narrative or gameplay segments. For example, when a player drags the timeline marker to a new position, the scrubbing logic 342 may identify the specific moment the player wants to access and seamlessly adjusts the game state to match that point. In some embodiments, this can involve resetting character positions, enemy states, environmental interactions, and any ongoing effects or animations to reflect the exact conditions that should be present at that moment in the game. Additionally, scrubbing logic 342 can ensure that complex sequences, such as cutscenes or boss fights, can be paused, resumed, or replayed without breaking the flow of the action, by correctly managing the underlying game engine processes, like physics calculations, audio synchronization, and event triggers. It can also apply checkpoints or buffer points to ensure that the most relevant data is quickly accessible, optimizing performance and preventing lag or delays during scrubbing.

In yet more embodiments, game logic 344 within the timeline system can serve as the core set of rules and processes that govern how the interactive game responds to player actions when they navigate through the timeline, ensuring that the game maintains consistency, functionality, and narrative coherence. This logic can be responsible for overseeing the state of gameplay elements, such as character health, inventory items, enemy behavior, and completed objectives, whenever a player scrubs forward or backward through the timeline. For instance, if a player chooses to revisit an earlier point in the game, the game logic 344 can be configured such that all relevant game states, such as quest progress, unlocked abilities, and environmental changes, are accurately reverted to match the conditions of that specific moment.

Conversely, if the player skips ahead, the game logic may appropriately update these states, applying any necessary adjustments to reflect what should be true at that advanced point in the narrative, such as setting completed quests as finished, adjusting character dialogues, or ensuring that previously defeated enemies remain inactive. Additionally, game logic 344 can interact with other systems, such as pinch point logic 340 and scrubbing logic 342, to manage how story events, challenges, and cutscenes are triggered or bypassed, ensuring that key narrative moments are experienced even if the player moves through the timeline non-linearly.

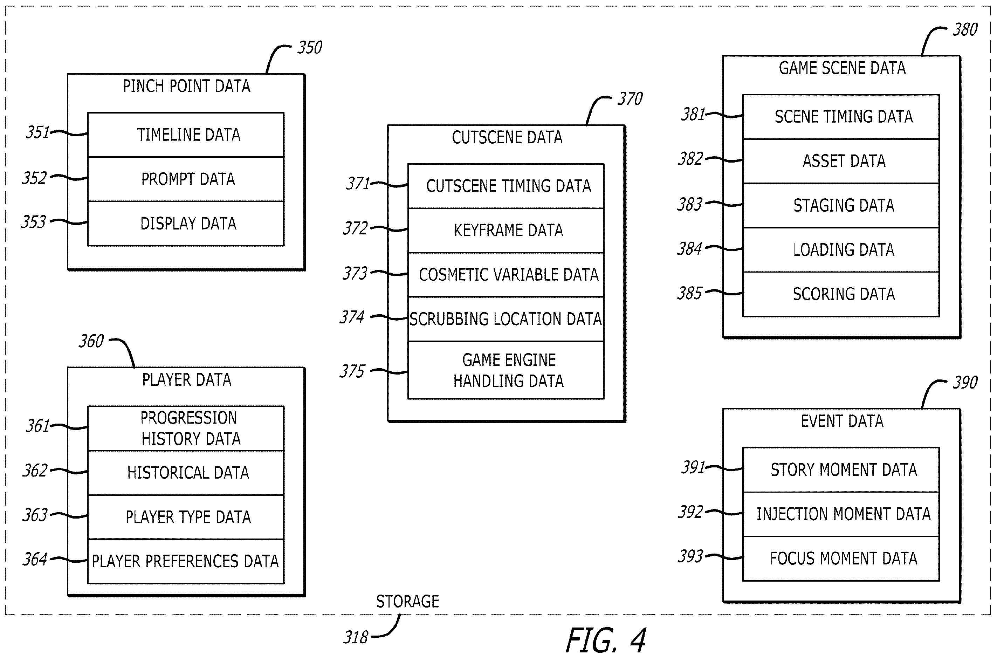

As discussed above in the embodiment depicted in FIG. 2, and in more detail below in the embodiment depicted in FIG. 4, the timeline control game system 300 may include a number of different types of available data to work with. These data may include pinch point data 350 that can capture various aspects of the gameplay flow being generated and utilized. There may also be player data 360 that can describe different attributes of the player and their current avatar and/or preferences. Cutscene data 370 can be configured to provide various types of information related to how a cutscene is generated and integrated within a gaming environment. Game scene data 380 can help process the various openended gameplay scenes between cutscenes. Finally, event data 390 can provide any specific indication or related data that can better facilitate operation of a timeline within in a timeline control game system 300.

Although a specific embodiment for an abstract block diagram of the components of a timeline control system 300 suitable for carrying out the various steps, processes, methods, and operations described herein is discussed with respect to FIG. 3, any of a variety of systems and/or processes may be utilized in accordance with embodiments of the disclosure. For example, the memory 345 can be an active memory that has the logics loaded/configured and is currently executing the various steps, processes, and/or methods described herein. In some embodiments, the memory 345 may be in a virtual environment such as a cloud-based game administration environment, or it may be distributed across a variety of network devices or servers. The elements depicted in FIG. 3 may also be interchangeable with other elements of FIGS. 1-2 and 4-16 as required to realize a particularly desired embodiment.

Referring to FIG. 4, an abstract block diagram of the data within a storage 318 of a timeline control game system in accordance with various embodiments of the disclosure is shown. In many embodiments, pinch point data 350 may comprise various sub-types of data like point of timeline data 351, prompt dimension data 352, and/or display data 353. However, as those skilled in the art will recognize, many other types of data may be included as well depending on the specific game and/or application.

In a number of embodiments, timeline data 351 can play a role in managing how players navigate through key narrative and gameplay moments within an interactive game. This data may provide detailed information on where each pinch point is located within the overall game timeline, effectively mapping out the structure of the game's narrative and ensuring that players can access crucial story elements in an organized manner. By referencing this timeline data 351, the system can allow players to move forward or backward through different sections of the game, offering flexibility in how they experience the story. The timeline data 351 can also be used to synchronize with other elements, such as cutscenes, gameplay sequences, and injected content, ensuring that each pinch point aligns correctly with the intended pacing and flow of the narrative. Additionally, this data can work in conjunction with other elements like keyframe data 372, ensuring that transitions between different points on the timeline are smooth and visually cohesive.

In some embodiments, prompt data 352 can be an aspect of the interactive game experience, particularly when it comes to managing player interactions with pinch points and the overall timeline system. This data can define the specific prompts that players encounter, guiding them through key decision-making moments, such as whether they wish to advance past a challenging section, revisit a previous narrative point, or explore an alternate story path. By providing clear and context-sensitive prompts, the game ensures that players are fully aware of their choices, helping them navigate the timeline without confusion or frustration. For instance, prompt data 352 may be used to present confirmation messages when a player attempts to skip ahead, ensuring they understand the potential consequences of missing out on certain story elements. It can also facilitate engagement by offering hints, tutorials, or explanations at critical moments, aiding players who may be struggling with specific gameplay mechanics or narrative elements. Furthermore, prompt data can be tailored based on the player's progression history or preferences, delivering personalized prompts that cater to their play style, such as suggesting easier pathways for less experienced players or highlighting hidden content for those who prefer a more exploratory experience.

In additional embodiments, display data 353 can play a vital role in controlling how narrative elements, gameplay information, and interactive options are presented to the player, particularly during pinch points or when interacting with a timeline feature. This data determines the visual arrangement, styling, and presentation of content, ensuring that key elements such as cutscenes, dialogue boxes, prompts, or timelines are displayed in a manner that is both aesthetically pleasing and easy to understand. For example, display data can specify the layout of the timeline interface, including the positioning of markers, keyframe previews, and labels, allowing players to clearly see their progress and the available story branches. In certain embodiments, display data 353 may also dictate how crucial story elements are shown or emphasized, such as by using animations, color changes, or highlights to draw the player's attention to important dialogue choices or pivotal scenes. In additional embodiments, the display data 353 can indicate if certain elements should even be shown on the timeline in order to not give away accidental spoiler information to the story elements. This adaptability can enhance the overall player experience by providing a seamless and immersive interface, regardless of how the game is accessed. Furthermore, display data 353 can be used to adjust the presentation of dynamic elements, such as reflecting cosmetic changes to a player's avatar within cutscenes or adjusting the visual representation of injected content, like advertisements or special events, to maintain visual coherence with the game's narrative style.

In still more embodiments, player data 360 can include progression history data 361, historical data 362, player type data 363, and/or player preferences data 364. Player data 360 may be formatted as a list of attributes or parameters. In some embodiments, the player data 360 be a structure with a set of values that can be interpreted by other logic to implement one or more actions.

In yet further embodiments, progression history data 361 can encompass a detailed record of a player's journey and achievements within the game, capturing a wide array of information about how far they have progressed, which challenges they have overcome, and which story elements they have experienced. This data may include specifics such as the levels or missions completed, the choices made during pivotal narrative moments, the items or skills acquired, and any optional content, such as side quests or collectibles, that the player has engaged with. By maintaining this comprehensive history, the game can use progression history data 361 to create a personalized experience that adapts to the player's past actions. For instance, when utilizing a timeline feature, the game can refer to this data to determine which points in the story are accessible, ensuring that players do not unintentionally skip over important narrative segments or encounter spoilers. It also allows the system to provide recommendations or hints that are tailored to the player's journey, such as suggesting relevant cutscenes or story branches they may want to revisit. Additionally, progression history data 361 can influence in-game events, dialogues, or cutscenes, creating a more immersive experience by reflecting the player's past decisions in the ongoing narrative. It may also be used to adjust the difficulty of future challenges, offering a more balanced experience that accounts for the player's demonstrated skill level or familiarity with the game mechanics.

In still additional embodiments, historical data 362 can refer to the cumulative record of a player's interactions, behaviors, and experiences across their entire time engaging with the game, often encompassing multiple playthroughs or sessions. This data might include a broad spectrum of information, such as the total time spent playing, the frequency and duration of game sessions, the choices made during key decision points, the paths taken through different levels or story arcs, the in-game achievements unlocked, and even specific gameplay styles or strategies frequently employed by the player. By capturing this data, the game engine can gain valuable insights into the player's habits, preferences, and progression patterns over time. One potential use of historical data 362 is to inform how the game presents the timeline feature, allowing it to suggest appropriate points to revisit or skip, based on the player's previous interactions. For example, if the player often engages in a completionist style, the game might highlight areas they have not yet fully explored, while a player who prefers a more narrative-driven experience may be prompted to revisit key story moments. Historical data 362 can also be utilized to dynamically adjust the difficulty or narrative complexity, tailoring the experience to align with the player's demonstrated skill level or familiarity with certain mechanics. Additionally, this data can serve as a foundation for adaptive storytelling, where future in-game events or dialogues may change in response to the player's accumulated experiences, ensuring that each playthrough feels unique and reflective of their past choices.

In more embodiments, player type data 363 can refer to information that categorizes players based on their preferred play styles, goals, and approaches to interacting with the game, helping to create a more tailored and engaging gaming experience. This data might include details such as whether a player tends to be a completionist who aims to explore every corner of the game and collect all items, a speed runner who focuses on finishing the game as quickly as possible, or a narrative-driven player who is most interested in experiencing the story without necessarily engaging in every gameplay challenge. It may also track whether the player prefers a more strategic and methodical approach to problem-solving, enjoys action-oriented and fast-paced segments, or seeks out social interactions and cooperative gameplay elements if the game has multiplayer features.

By collecting and analyzing player type data 363, the game can adapt its timeline functionality, difficulty settings, and narrative delivery to better suit the individual player's preferences. For example, a player who enjoys uncovering every story detail might be presented with a more detailed timeline that includes optional narrative branches or hidden plot points, while a speed runner might be offered shortcuts or more efficient paths to navigate through the game's timeline. Additionally, this data can be used to adjust in-game tutorials, tips, and prompts, ensuring that players receive the guidance and support that align with their chosen style. For players who enjoy challenges, the game might increase the difficulty or highlight competitive aspects, whereas a more story-focused player might receive an experience that emphasizes narrative elements over combat or puzzle-solving.

In yet further embodiments, player preferences data 364 can encompass a range of personalized settings and options that reflect how a player chooses to experience and interact with the game, covering aspects such as audio and video configurations, difficulty levels, assistance modes, and various accessibility features. This data may include the player's selected audio settings, such as overall volume, balance between music, dialogue, and sound effects, as well as preferences for surround sound or stereo output. Video settings might involve the resolution, brightness, contrast, and gamma levels that the player prefers, as well as options for graphical fidelity, frame rates, and the use of visual effects like motion blur or depth of field. This data can also include choices related to difficulty modes, whether the player prefers an easy, normal, or hard experience, or more nuanced assistance settings, such as enabling hints, tutorials, or adaptive difficulty that adjusts in real-time based on the player's performance.

In various embodiments, player preference data 364 can help ensure that the game offers an experience tailored to the player's comfort level and skill. For example, a player who has set their preferences for a high difficulty level and disabled hints may be presented with fewer prompts or assistance when navigating challenging gameplay sections or displaying a timeline. Additionally, accessibility options like colorblind modes, subtitle sizes, or control customization preferences can be part of this data, allowing the game to accommodate a wider range of players, including those with specific needs in regard to accessing and handling the timeline.

In many embodiments, cutscene data 370 may include data related to the cutscenes rendered within the game environment, and have associated data such as, but not limited to, cutscene timing data 371, keyframe data 372, cosmetic variable data 373, scrubbing location data 374, and/or game engine handling data 375. In various embodiments, other factors related to the cutscenes, such as the display data 353 can reflect the ways in which the cutscene is rendered, etc.

In a number of embodiments, cutscene timing data 371 can be an element that manages the precise scheduling and synchronization of cutscenes within an interactive game, ensuring that these narrative sequences integrate seamlessly with the gameplay experience. This data can include the exact start and end times of each cutscene, as well as information on how long each segment of the cutscene should last, allowing the game to maintain a consistent flow between storytelling and interactive elements. It may also encompass timing cues that dictate when specific animations, dialogues, sound effects, or visual transitions should occur within the cutscene, ensuring that all elements are synchronized for maximum emotional impact. For instance, cutscene timing data can control the pacing of character movements, camera angles, and special effects to align with key story beats or dialogue delivery, creating a more cinematic and engaging experience. Furthermore, this data can interact with gameplay events, triggering cutscenes only after certain player actions, objectives, or achievements have been completed, thus ensuring that the story unfolds in a way that feels natural and responsive to the player's progression. Additionally, cutscene timing data 371 may include contingencies for pausing, skipping, or resuming cutscenes, allowing the game to adapt if a player decides to scrub through the timeline or revisit specific moments. This adaptability ensures that cutscenes can be replayed or interrupted without disrupting the narrative flow, preserving the integrity of the storytelling experience while accommodating the player's level of engagement.

In more embodiments, keyframe data 372 may be a component in animation and cutscene management within an interactive game, defining the specific frames at which critical changes in movement, position, or visual effects occur. This data can include detailed information about the exact points in time when characters, objects, or camera angles transition from one state to another, allowing for smooth and dynamic animations throughout both gameplay and narrative sequences. For example, keyframe data might indicate the precise moments when a character lifts an arm, changes facial expressions, or shifts their stance, ensuring that these actions appear fluid and natural. Depending on the context, timeline control logic may determine the best points to preview in the timeline and/or when to stop and restart gameplay.

In various embodiments, the keyframe data 372 can also involve complex movements, such as environmental changes, explosions, or light transitions, where the timing and interpolation between keyframes are essential for maintaining visual consistency and realism. In cutscenes, keyframe data is particularly valuable, as it allows animators to craft cinematic sequences with accurately timed character interactions, gestures, and camera movements that align with dialogue or dramatic story moments. Additionally, based on the game engine utilized, this data can also adapt dynamically to real-time events within the game, adjusting the position or animation of characters and objects based on the player's actions or changes to the environment. For instance, if a player has customized their character's appearance, keyframe data can be adjusted to ensure that the altered elements are accurately represented in cutscenes or during gameplay.

In additional embodiments, cosmetic variable data 373 can refer to the information that tracks and manages the visual customizations made by a player to their character, equipment, or other game assets, ensuring that these changes are consistently reflected throughout gameplay, cutscenes, and within the timeline control system. This data may include details about the player's chosen outfits, hairstyles, accessories, weapon skins, or any other cosmetic modifications applied to their avatar or in-game items. In a timeline control system, cosmetic variable data can be utilized for maintaining continuity and immersion, as it ensures that whenever a player navigates forward or backward through different segments of the game, their customized appearance is accurately displayed. For example, if a player decides to change their character's outfit or armor midway through the game, the cosmetic variable data 373 can be used to update and display this change even when the player revisits earlier cutscenes or gameplay moments via the timeline. This dynamic adaptation helps preserve the sense of personalization and ownership that players have over their in-game experience, making sure that their choices are consistently visible, regardless of where they are in the story or gameplay sequence. Additionally, cosmetic variable data 373 can be used to modify environmental elements or NPC appearances if they have been influenced by the player's customization decisions, ensuring that the game world responds appropriately to the player's actions.

In further embodiments, scrubbing location data 374 can be an aspect of a timeline control system defining the specific points within cutscenes and gameplay sequences where players can pause, rewind, fast-forward, or resume their experience seamlessly. This data may include carefully chosen markers that indicate optimal stopping or restarting points, ensuring that transitions between different moments in the game feel smooth and natural, even when the player interacts with the timeline. For example, cutscenes may be densely populated with scrubbing locations, allowing players to stop and start at key narrative beats, dialogue exchanges, or animation transitions, thereby maintaining the cinematic flow and ensuring that no crucial story elements are missed. These scrubbing locations might be placed at points where the camera shifts, a character finishes speaking, or a significant plot event occurs, offering clear and logical places for players to re-engage with the content. In contrast, general gameplay scenes may feature fewer scrubbing locations, often positioned at pinch points or moments where all players converge on a particular narrative or gameplay event, such as, but not limited to, the beginning of a mission, after completing a boss fight, or before entering a new area.

In still more embodiments, game engine handling data 375 can be a component within a timeline control system, as it can govern how the game engine manages the loading, execution, and playback of various assets, animations, and interactive elements, particularly when players navigate through cutscenes or gameplay sequences using the timeline. This data may include instructions on how to handle the initialization and reinitialization of assets, such as character models, textures, lighting effects, soundtracks, and particle systems, ensuring that they are correctly rendered and synchronized when stopping or restarting cutscenes in real time or near real time.

One of the key challenges this data addresses is that certain elements within a game engine may not function properly if they are not executed in a precise order, such as scripted events, physics simulations, or AI behavior routines that rely on sequential processing. Game engine handling data 375 can either document these dependencies and execution requirements or provide predefined methods to manage exceptions, ensuring that the game can adapt when players scrub through the timeline or resume gameplay from a different point. For example, if a cutscene involves a series of complex character animations that need to play in a specific sequence, the game engine handling data can ensure that these animations are reset to the correct keyframes or states whenever a player rewinds or fast-forwards through the scene. This helps maintain the integrity of the narrative and visual presentation, preventing glitches, desynchronization, or broken interactions. Additionally, this data can manage resource loading and unloading efficiently, optimizing performance by ensuring that only the necessary assets are active at any given moment, even when the timeline is manipulated frequently.

In numerous embodiments, game scene data 380 can include various types of data that affect the operation of a general gameplay area within the interactive game. This may include, for example, scene timing data 381, asset data 382, staging data 383, loading data 384, and/or scoring data 385. However, as those skilled in the art will recognize, other types of game scene data 380 may be utilized as needed.

In a number of embodiments, scene timing data 381 within gameplay scenes can be utilized for managing the precise sequencing and duration of events, actions, and interactions, ensuring that every element of a game scene unfolds in a cohesive and engaging manner. This data may include detailed information about when specific events should occur, such as the triggering of enemy encounters, environmental changes, dialogue exchanges, or the activation of interactive objects. It may also encompass timing for in-game mechanics like puzzle-solving sequences, platform movements, or combat animations, making sure that these elements are synchronized with player actions and narrative progression. Within a timeline control system, scene timing data 381 can be utilized because it allows the game to accurately manage the flow of gameplay when players choose to scrub forward, rewind, or jump to different points in the timeline. For instance, if a player decides to revisit a particular gameplay moment, the scene timing data can ensure that all events, from character movements to audio cues, are reset or adjusted to match the chosen point, maintaining the intended pacing and continuity. This can be especially important for scenes that involve time-sensitive elements, such as timed puzzles, coordinated attacks, or events that rely on precise sequencing to function correctly.

In more embodiments, asset data 382 can refer to the comprehensive collection of information about all the visual, audio, and interactive elements that populate a game environment, ensuring that each asset is correctly rendered, positioned, and functional within the context of the scene. This data can include details about character models, environmental textures, objects, weapons, vehicles, sound effects, background music, particle effects, lighting setups, and any other assets that contribute to the scene's overall atmosphere and interactivity. Each asset's data can encompass attributes such as its 3D model, animations, collision properties, material properties, and any associated sounds or effects that bring it to life.

Within a timeline control system, asset data 382 can play a crucial role in maintaining the integrity of the gameplay experience when players choose to scrub through, pause, or revisit different moments. For instance, if a player decides to jump back to an earlier point in the game, the asset data ensures that all objects are loaded, positioned, and animated correctly, reflecting the exact state they were in at that moment, including any modifications or interactions the player had previously made. This might involve reloading destroyed objects, resetting character positions, or restoring environmental changes that occurred due to player actions. Additionally, asset data helps optimize performance by determining which assets need to be active, loaded, or unloaded at any given point on the timeline, preventing unnecessary strain on system resources.

In further embodiments, staging data 383 within gameplay scenes can refer to the detailed information that dictates the placement, arrangement, and movement of assets, characters, and environmental elements, ensuring that each component is positioned and presented correctly within the game world. This data can include instructions on where objects such as props, obstacles, interactive items, and NPCs (non-player characters) should be located, how they should be oriented, and how they should interact with each other and the environment. It may also define the pathways or zones where characters and enemies can move, the locations of triggers for events, and the spatial relationships between various elements to create an engaging and believable scene. Within a timeline control system, staging data plays a crucial role in maintaining consistency and accuracy when players choose to scrub through or revisit different moments in the game. For instance, if a player decides to rewind to an earlier point in a scene, the staging data 383 can ensure that all assets return to their original positions, states, and orientations, recreating the exact arrangement that existed at that moment. This might involve resetting characters to specific locations, reactivating objects that were moved or destroyed, or repositioning environmental elements to match the player's previous interactions. Moreover, staging data 383 can be used to adjust the scene dynamically based on player actions, such as ensuring that objects dropped by the player remain in place or that enemies return to their original patrol routes when the timeline is manipulated.

In yet further embodiments, loading data 384 can be configured to manage how and when assets, resources, and interactive elements are loaded into memory, ensuring that the game runs smoothly and efficiently, even as players navigate through different parts of the game world with a timeline. This data can include detailed instructions about which assets, such as character models, textures, animations, sound files, environmental objects, lighting effects, and particle systems need to be loaded or unloaded at specific moments within a scene. It may also manage streaming data for large or complex environments, determining which sections of a level are actively rendered based on the player's location or actions.

In a timeline control system, loading data 384 can be utilized for enabling the game to handle real-time transitions when players scrub through, pause, or jump to different points in the timeline. For example, if a player decides to revisit an earlier part of a gameplay scene, the loading data 384 can ensure that all relevant assets are preloaded into memory before the scene resumes, preventing delays, lag, or visual pop-ins that could break immersion. Additionally, this data can be optimized to load only the necessary assets required for the specific moment in the timeline, reducing the strain on system resources and ensuring smooth performance, even in graphically intensive scenes. This selective loading may be configured for maintaining a responsive and fluid experience, especially when players frequently move backward and forward through the timeline.

In more additional embodiments, scoring data 385 can encompass all the information related to how points, rewards, achievements, or other metrics are assigned to a player based on their actions, performance, and decisions throughout the game. This data can include criteria such as the number of enemies defeated, successful completion of objectives or challenges, accuracy in combat, time taken to complete a level, exploration milestones, or the collection of in-game items. It may also track bonuses for special actions, such as pulling off complex combos, discovering hidden areas, or achieving certain gameplay feats under challenging conditions.

Within a timeline control system, scoring data 385 can play an important role in ensuring that the player's achievements and progress are accurately recorded, even when they choose to scrub through, revisit, or skip ahead in the game. For instance, if a player decides to rewind to a previous point in a scene to redo a section, the scoring data ensures that any points, rewards, or penalties previously earned are adjusted accordingly, maintaining the integrity of the scoring system. This can prevent potential exploits, such as accumulating points repeatedly by replaying easy sections, ensuring that the player's overall score remains a true reflection of their skill and accomplishments. Moreover, scoring data 385 can be used to provide feedback, allowing the timeline system to highlight moments where the player excelled or struggled, which can be useful for self-improvement or for understanding how different gameplay choices impacted their overall performance.

In additional embodiments, event data 390 may comprise various data related to how events within an interactive game can influence the use and/or management of a timeline system. In some embodiments, the event data 390 may include story moment data 391, injection moment data 392, and/or focus moment data 393.

In still more embodiments, story moment data 391 can be an aspect of game design that encompasses all the key narrative beats, plot points, character interactions, and emotional arcs that drive the story forward within a gameplay experience. This data may include detailed information about pivotal moments such as significant plot twists, character introductions or departures, dialogue exchanges, decisions that impact the storyline, and events that mark the progression of the game's narrative. Each story moment can be carefully marked within the game to indicate when and where it occurs, as well as how it influences the broader narrative structure.

Within a timeline control system, story moment data 391 can play a crucial role by providing players with a clear and organized view of the narrative elements they have encountered or are about to experience. For example, if a player decides to revisit or jump ahead using the timeline feature, the story moment data ensures that they can easily identify and access these key moments, allowing them to re-experience important cutscenes, dialogue choices, or pivotal events without losing track of the overall story. This data can also help prevent narrative inconsistencies, ensuring that if a player skips ahead, they are made aware of the context or given the option to catch up on missed story moments, thereby preserving the coherence and flow of the storyline. Additionally, story moment data 391 can be used to highlight choices or actions that have had a significant impact on the plot, allowing players to understand how their decisions have shaped the narrative and encouraging them to explore different story branches or outcomes.

In yet further embodiments, injection moment data 392 can refer to the specific points within a game where external content, such as advertisements, promotional material, additional narrative elements, or real-world event updates, can be dynamically introduced into the gameplay experience. This data may include details about the timing, placement, and content of these injected elements, ensuring they integrate seamlessly into the game's flow without disrupting the player's immersion. Injection moment data 392 may encompass information about where in the game world or timeline the content should appear, the duration it should be displayed, and the context in which it is relevant, such as during a pause in action, at a transition between levels, or within a cutscene.

In a timeline control system, injection moment data 392 can be configured to maintain consistency and relevance when players interact with the timeline feature. For example, if a player rewinds to a point before an injected advertisement or special event, the system can determine whether that content should be reintroduced, modified, or skipped based on its timing or relevance at that moment. This can ensure that injected elements do not feel repetitive or out of place, allowing the game to adapt to real-time changes, such as updating ads to reflect current promotions or adjusting narrative injections to match ongoing story developments. Conversely, in some embodiments, timeline scrubbing can be modified to direct players to see the injection elements. Furthermore, injection moment data 392 can be tailored to respond to the player's preferences or behavior, ensuring that the content remains contextually appropriate and enhancing the overall gaming experience.

In numerous embodiments, focus moment data 393 can refer to the points within an interactive game wherein a player's attention is required to fully comprehend or engage with important aspects of the narrative, gameplay mechanics, or environmental details. This data may include information about key dialogue exchanges, dramatic cutscenes, pivotal story choices, essential tutorials, or intricate gameplay sequences that demand the player's focus to progress or understand the plot. For example, focus moment data 393 might highlight moments where a character reveals a crucial piece of information, a plot twist is unveiled, or a challenging combat encounter requires the player to employ a specific strategy.

Within a timeline control system, focus moment data 393 can be configured to ensure that players do not miss out on these essential moments when navigating through the game. If a player decides to rewind or fast-forward through the timeline, the system can use this data to pause or prompt the player at these focus moments, providing an opportunity to absorb the critical information or actions required for their journey. This may ensure that players remain engaged with the story, even if they skip ahead, and can help them stay aware of the significant elements that drive the narrative or gameplay forward. Additionally, focus moment data 393 can be used to enhance accessibility, allowing players who may have missed or misunderstood a key moment the chance to revisit and engage with it again, reinforcing their understanding and connection to the game's storyline or mechanics.

Although a specific embodiment for an abstract block diagram of the data within a storage of a timeline control system suitable for carrying out the various steps, processes, methods, and operations described herein is discussed with respect to FIG. 4, any of a variety of systems and/or processes may be utilized in accordance with embodiments of the disclosure. For example, the data types described herein can vary depending on the type of application deployed and/or desired. For example, each specific data type may be concatenated into one data structure or be broken up into multiple additional data structures. Those skilled in the art will recognize that data can be formatted in a variety of ways beyond the specific embodiment depicted in FIG. 4. The elements depicted in FIG. 4 may also be interchangeable with other elements of FIGS. 1-3 and 5-16 as required to realize a particularly desired embodiment.

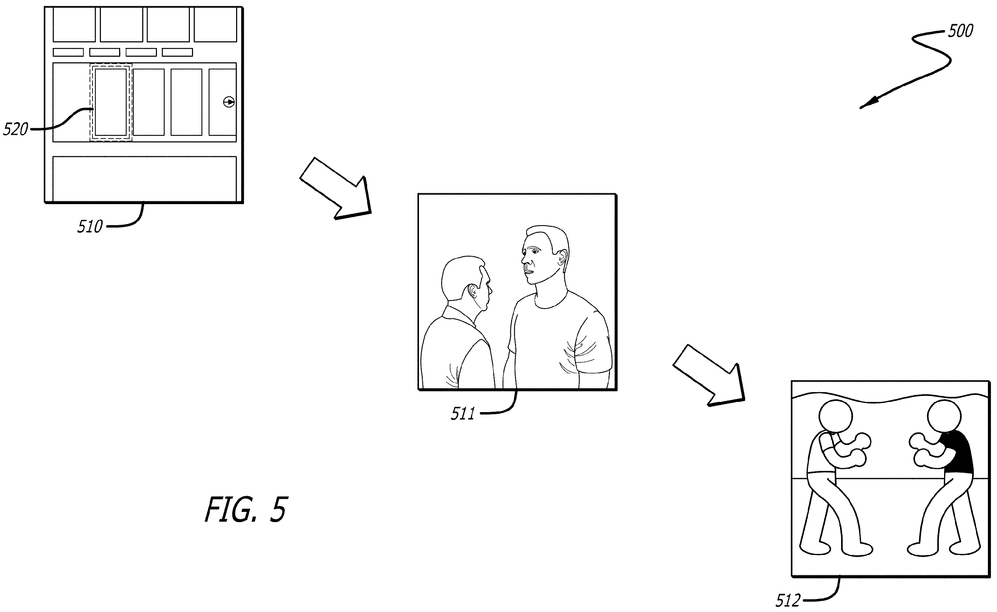

Referring to FIG. 5, a conceptual illustration of starting an interactive game with automatic progression management in accordance with various embodiments of the disclosure is shown. In a game system where player progression is managed automatically without the need for manual saves, the player experience becomes streamlined and more immersive from the moment they begin interacting with the game. In the embodiment depicted in FIG. 5, the player is presented a game selection screen 510 with a plurality of game choices. Among those choices is a game icon 520 representing a game with automatic player progression management.

Upon selecting/starting the game, the player might be presented with a simple game selection screen displaying the titles they have played or have in progress. However, in many embodiments, instead of navigating through save files, menus, or title screens prior to starting the game or to find where they left off, the game can immediately know the exact point the player last interacted with the game world, based in part, on the timeline structure. This can be done via an association of the player with that moment on the timeline. In this way, based on the structure of the game, no traditional "save file" may be needed. For example, if the game is structured such that every player who enters an area will have the same items, stats, etc., then only a reference to the last timeline is needed to start the game again upon player re-entry. In some embodiments, the determination of location on the timeline may be based on other factors such as data currently in memory, assets previously loaded, items or other assets unlocked, etc. These references can be used in lieu of a traditional save file tied to the player's account, etc.

These various embodiments can eliminate the need for traditional save screens or title screens. The game can recognize the player's progress within the timeline system and, upon selecting the game, resumes at the nearest logical point, whether in the middle of a cutscene, a combat sequence, or an exploration segment, etc., allowing the player to dive straight into the action without delay. In certain embodiments, it may be desired to alter the exact restart point due to expositional (e.g., starting just before an important piece of dialogue that shouldn't be missed), or resource limitations (e.g., loading in at a different location just prior to an asset-heavy scene could allow for faster/more seamless loading of the game).

Once the player selects the game, the system could, for example, automatically load into a cutscene 511, picking up exactly where the player left off in the story. For instance, if the player last exited the game during a critical narrative moment, the timeline would seamlessly resume at that moment, ensuring the player doesn't miss any essential story details. The timeline scrubbing feature mentioned earlier is at play here as well, dynamically adjusting the scale and focus of the timeline so that the player's return to the game is precise and contextually appropriate. In this case, the cutscene could represent a transition between story beats, setting up the action that the player is about to encounter. By utilizing the timeline system, the game ensures continuity without the need for manual input from the player, creating a more fluid and engaging experience.

Following the cutscene 511, the player could be seamlessly transitioned into an action scene 512, with the game remembering where they were in terms of gameplay as well. This might involve combat, exploration, or puzzle-solving, but because the game progression is managed automatically, the player picks up right where they left off, as though they had never stopped playing. The timeline structure not only ensures that story moments are experienced in the correct sequence, but it also manages gameplay elements, loading in the exact state of the game world and player progress. This eliminates the frustration of losing progress or needing to manually manage checkpoints, giving players a more immersive and uninterrupted experience. By removing the traditional barriers of save systems and title screens, the timeline-driven approach offers players the freedom to jump straight back into their adventure, making their interactions with the game feel more natural and cohesive.

These actions in an interactive game, where a player resumes exactly where they left off without needing to manually save or manage progression, can provide a similar feeling to a player compared to how streaming services operate with movies or TV shows. Just like when a user resumes a film on a streaming platform, the game would automatically load from the exact point where the player last stopped. On a streaming service, the viewer doesn't need to worry about manually remembering where they paused; they simply press play, and the content resumes seamlessly, picking up right where it left off. Similarly, this approach to gaming creates a streamlined, effortless experience where the player can immediately return to the game world without navigating through title screens, save files, or loading checkpoints. The main difference, however, lies in the nature of interaction; while a streaming service delivers passive content that progresses automatically, a game involves dynamic interaction, requiring the game to track not just a single timeline but a host of variables related to gameplay state, world conditions, and player choices.

To create this seamless experience for a game, various embodiments involve utilizing and overcoming several technological challenges. For example, unlike a passive movie stream, games are complex and interactive, with many active processes running simultaneously. One key issue is how to efficiently manage and store the vast amount of dynamic game state data, such as character positions, inventory, completed tasks, and environmental changes, and ensure that it is ready for immediate loading. Certain embodiments of the interactive game could be optimized for real-time saves that occur invisibly in the background, capturing every detail of the player's progression without disrupting the experience. This can be done by prioritizing which assets are tracked and loaded, as well as what hardware features are available (e.g., solid-state hard drives, suitable random-access memory, etc.).

Additionally, ensuring smooth transitions between narrative (cutscenes) and gameplay segments would require advanced scrubbing and state management systems, which could restore both the player's exact location and the state of the world, including enemies, items, and dialogue outcomes. Moreover, the infrastructure behind cloud saves, real-time data synchronization, and minimal loading times would need to be robust to mimic the near-instant resumption players are used to in streaming services, all while handling the computational complexities unique to interactive gaming. In other words, overcoming these hurdles to result in a fluid, immersive experience with the convenience of streaming media is not simply applying the same methods, but instead is modified and adjusted to account for the complexity of interactive game worlds.

Although a specific embodiment for an interactive gameplay flow through a plurality of pinch points suitable for carrying out the various steps, processes, methods, and operations described herein is discussed with respect to FIG. 5, any of a variety of systems and/or processes may be utilized in accordance with embodiments of the disclosure. For example, various embodiments may provide a means to allow a player to enter a title screen based on the player's preference, as seen in more detail below. The embodiment depicted in FIG. 5 is for explanatory purposes and is not meant to be limiting regarding shape and layout conceptually to the embodiments described herein. The elements depicted in FIG. 5 may also be interchangeable with other elements of FIGS. 1-4 and 6-16 as required to realize a particularly desired embodiment.

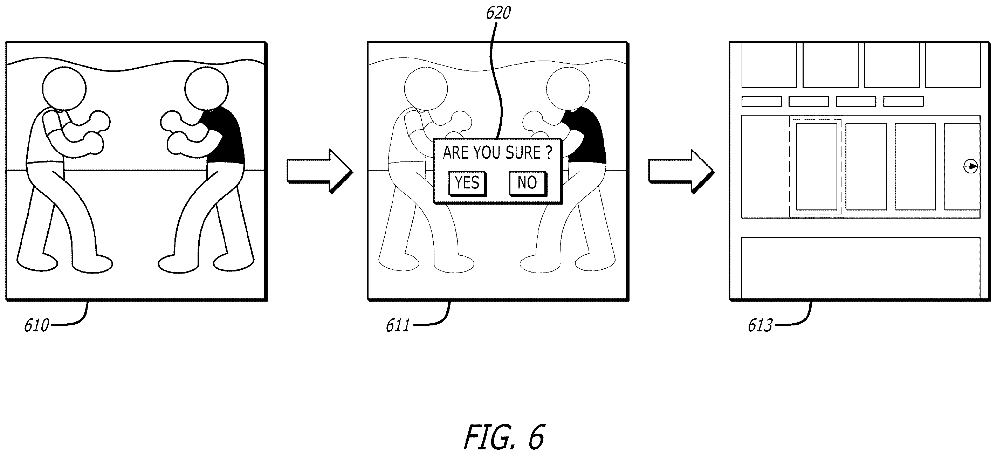

Referring to FIG. 6 a conceptual illustration of an exit prompt overlay within gameplay in accordance with various embodiments of the disclosure is shown. When a player is immersed in an action scene 610, such as battling enemies or otherwise completing an intense objective, they might decide to pause or exit the game, either because they need a break or due to other reasons. Upon initiating the exit process within the action scene 611, the game could present the player with a prompt 620 asking, "Are you sure you want to exit?" This prompt 620 could feature a simple interface with "yes" and "no" options, allowing the player to either confirm their intent to leave or cancel the action. Other prompts and prompt formats are also contemplated, such as additional reminders of the current state of an ongoing battle, game state, etc. In various embodiments, the prompt 620 can be called up, generated, and/or displayed within the game engine or otherwise during gameplay. While certain elements may be streamed or otherwise dynamically loaded over a network, many embodiments comprise the ability to load or otherwise utilize the automatic progression features within a game without the need for streaming additional data.

If the player selects "no," the game could return them directly to the action scene they were just engaged in, ensuring a seamless transition back into gameplay without breaking the immersion. Alternatively, the player might be transported to a second action scene or a different part of the game world, depending on the context of the gameplay. However, if the player selects "yes," indicating their intent to exit, the game could proceed to close the current session and return to a game selection screen, as if the game had been fully closed out. However, rather than losing any progress, the game could, in some embodiments, automatically capture and save the player's exact position in the timeline, including all associated gameplay elements such as the current state of the action scene, character health, enemy positioning, and other dynamic factors. This can ensure that the player's progress is preserved without the need for manual saving. When the player returns or re-enters the game later, the timeline system can allow for a seamlessly resumption from the exact point where they left off, helping to preserve the immersion and intensity of the gameplay.

Although a specific embodiment for an exit prompt overlay within gameplay suitable for carrying out the various steps, processes, methods, and operations described herein is discussed with respect to FIG. 6, any of a variety of systems and/or processes may be utilized in accordance with embodiments of the disclosure. For example, the structure or visual representation of the prompt 620 may be any shape or variation, and may not include a text prompt at all (such as simply exiting the game or changing another visual item within the screen contents, etc. Since the player can jump back into the game so seamlessly, there may not be a need to warn the player before exiting the game, even if on accident. The elements depicted in FIG. 6 may also be interchangeable with other elements of FIGS. 1-5 and 7-16 as required to realize a particularly desired embodiment.

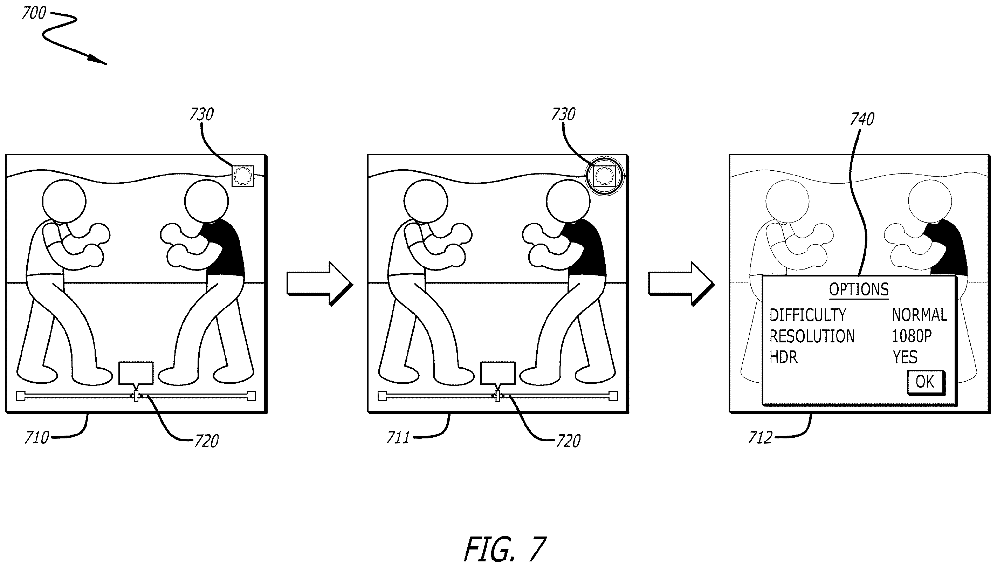

Referring to FIG. 7, a conceptual illustration of an options screen 740 within a bi-directional timeline interactive game 700 in accordance with various embodiments of the disclosure is shown. In a bi-directional timeline game, the player could easily bring up the timeline 720 during gameplay, such as an action scene 710, which would serve as a central interface not only for navigating through different points in the game but also for accessing additional options. Alongside the scrubbing functionality for moving forward and backward in the game's timeline, the action scene 710 may be configured with an additional icon or separate overlay indicating an option such as "settings" available on the timeline interface. In more embodiments, usage of the timeline 620 can allow players to travel from game point to game point without having to exit to other streaming content, menus, or otherwise exiting the game engine. In some embodiments, the timeline 620 may be utilized to jump from a first gameplay area directly to a second gameplay area.

In the embodiment depicted in FIG. 7, the settings option is shown as a gear icon730. The player can navigate to and selecting this option, which can be indicated by a circle 730, glowing, or other indication. In response to selecting that option, the player can be presented with an options screen 740, seamlessly integrated into the game action scene 712, which may remain paused or in a static game state while selected. In this way, the player would not need to return to a title screen or separate pause menu. This options screen 740 could provide access to various game settings, allowing the player to adjust difficulty, tweak video settings like resolution and HDR, or manage audio preferences such as music volume and sound effects balance. This on-the-fly access to settings offers a more fluid and streamlined experience, as players can make necessary adjustments without fully leaving or breaking the current scene and lose the immersion or flow of the game.

By incorporating an options overlay directly into the timeline, various embodiments of the interactive game can move closer to delivering a more movie-like experience, where traditional menus and title screens are minimized in favor of a more immersive, cinematic presentation. Players don't need to navigate away from their current moment in the game to make changes; instead, they can quickly access what they need and then seamlessly return to the game or continue interacting with the timeline. This approach can eliminate the need for separate loading screens or the typical "main menu" structure, placing everything the player needs within the context of the ongoing game. The result is a more streamlined, cohesive experience that maintains immersion, similar to the uninterrupted flow of a movie or TV show on a streaming service, but with the added interactivity and control that only gaming can provide. This design choice can provide fluid transitions between game modes and allow for less reliance on static menus to enhance player engagement and create a more refined, cinematic journey.

In some embodiments, the game may be loaded within a video game system, such as a console, computer, etc. Game data related to the game engine or pinch points may be loaded within the memory of the video game system prior to utilization of the timeline or even gameplay. In certain embodiments, the pinch point data may be dynamically generated in response to one or more gameplay events or choices made by the player. This pinch point data may be generated and stored within the game engine, video game device, or other local computing system.

Although a specific embodiment for a plurality of gameplay modes suitable for carrying out the various steps, processes, methods, and operations described herein is discussed with respect to FIG. 7, any of a variety of systems and/or processes may be utilized in accordance with embodiments of the disclosure. For example, any combination of options, overlays, or other necessary menus can be configured in a similar manner to reduce the need for navigation away from the game itself, such as to a title screen. It is contemplated that the embodiment depicted in FIG. 7 is shown for illustrative purposes and is not meant to be limiting to this specific interactive game structure. The elements depicted in FIG. 7 may also be interchangeable with other elements of FIGS. 1-6 and 8-16 as required to realize a particularly desired embodiment.

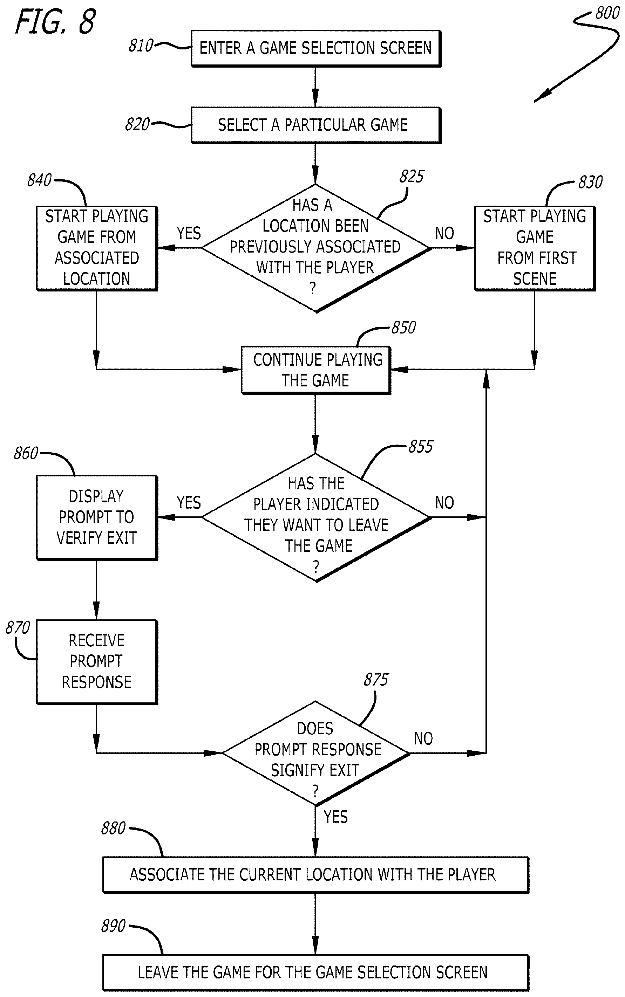

Referring to FIG. 8, a flowchart of a process 800 for automatic game progression management in accordance with various embodiments of the disclosure is shown. In many embodiments, the process 800 can enter a game selection screen (block 810). The process 800 can begins when the player exits an ongoing game or application, either through a menu prompt or a system trigger. As those skilled in the art will recognize, a game selection screen serves as a centralized hub where the player can view all their available games within a game system. In some embodiments, at least one game, such as a bi-directional timeline interactive game can provide or be represented by a visual timeline or progress marker showing where the player left off in each title. The transition between these games can be smooth and immediate, maintaining the continuity of the experience without lengthy loading times.

In a number of embodiments, the process 800 can select a particular game (block 820). In certain embodiments, the system can load the game, which can be configured with logic to begin automatically resuming the selected game at the exact point the player last interacted with, often utilizing the bi-directional timeline system to navigate to the proper state. In various embodiments, the system can recognize the configuration of the game (e.g., as a bi-directional timeline game with automatic player progress management) and adjust one or more loading states or variables configured to help facilitate this process. For example, the system may allocate various fast-loading resources to the game so that it can promptly return the player to the action.

In more embodiments, the process 800 can determine if a location has been previously associated with the player (block 825). This determination of if a location on the timeline has been previously associated with a player can be based on a combination of system-level data and in-game variables, creating a seamless and efficient method for tracking progress without relying on traditional save files. At a system level, the game could maintain player-specific data, such as timestamps or progress markers, which indicate the last point the player interacted with the game. This data could be automatically updated in the background as the player progresses, allowing the system to instantly identify the player's position on the timeline when they return.

Additionally, in various embodiments, the process 800 can leverage in-game variables, such as unlocked items, completed quests, player stats, or specific achievements, to cross-reference the current state of the game. By analyzing these external clues, the system can infer the player's progress, determining whether a particular location on the timeline has been previously visited. For example, if certain items have been unlocked or a boss has been defeated, the system can ascertain that the player has already reached and passed that point in the game. This dynamic approach can enable the game to accurately track and resume player progress without the need for a dedicated save file, offering a more fluid and immersive experience.

If it is determined that no association has occurred previously, various embodiments of the process 800 can start playing the game from the first scene (block 830). This is similar to starting a game over or at the beginning. However, if it is determined that a player has been previously associated with the game, the process can, in certain embodiments, start playing the game from the association location (block 840). The process for loading a game at a specific point on the timeline for a player, based on their determined association, f requires the game engine to accurately load all relevant assets, such as character positions, inventory, unlocked items, and environmental conditions, to ensure the game world reflects the exact moment the player left off. One technical challenge is managing the efficient loading and synchronization of these elements, especially in complex open-world games with numerous variables.

Additionally, the game can be configured to handle real-time transitions between cutscenes and active gameplay, ensuring that the player's progress is restored seamlessly without lag or inconsistencies. Another issue to consider is the potential complexity of player-specific states, such as completed missions or dialogue choices, which may need to be cross-referenced with the timeline data to ensure that everything aligns correctly when resuming the game. Overcoming these challenges involves robust asset management, optimized memory usage, and an intelligent tracking system that can quickly reinitialize the game world at any given point on the timeline.

In additional embodiments, the process 800 can provide for the player to continue playing the game (block 850). This can occur with the option of the timeline as described above. In further embodiments, the process 800 can determine if the player has indicated that they want to leave the game (block 855).

If it is determined that the player has not indicated a desire to leave the game, the process 800 can continue to play the game (block 850). However, if it is determined that the player has indicated a desire to leave the game, the process 800 can, in some embodiments, display a prompt to verify exit (block 860). In this process, a player wishing to leave the game may indicate their intent through an in-game menu or by pressing a specific button combination, which triggers a prompt asking for confirmation. The prompt could display an "Are you sure you want to exit?" message, offering the player the option to select "yes" or "no." Although this could be prompted by other actions, such as player inactivity, etc.

In still more embodiments, the process 800 can receive a prompt response (block 870). The prompt response is a response received in reaction to a prompt displayed on a display. This can be received as a button press, voice indication, etc. In yet further embodiments, the process 800 can determine if the prompt response signifies a command to exit the game (block 875). In various embodiments, this can be done by reading the response or otherwise comparing it to a known command.

If it is determined that the prompt does not indicate a command to leave the game, the process 800 can again continue to play the game (block 850). However, if it is determined that the prompt response was a command or confirmation to leave the game, the process 800 can associate the current location with the player (block 880). In some embodiments, before the player exits the game, the process could automatically capture and associate the player's current location within the game and timeline by recording key data points such as character position, inventory status, mission progress, and environmental conditions. This information can be linked to the player's profile at a system level, ensuring that their exact state within the game world is preserved. The timeline system could then register this data to a specific marker on the timeline, allowing the game to accurately resume from this point when the player returns. However, it is contemplated that certain embodiments may not have a specific recording action directly associated with the player, but with the system such that the location of the player within the game could be constructed or otherwise determined at a later time upon re-entry by the player, allowing for no specific game save file/data, etc.

In still additional embodiments, the process 800 can leave the game (block 890). Upon confirming the intent to exit, various embodiments of the process 800 can seamlessly save the player's current progress and location on the timeline, ensuring all game states are preserved. The game can then transition smoothly to the game selection screen, where the player can view their available games.

Although a specific embodiment for a process 800 for automatic game progression management suitable for carrying out the various steps, processes, methods, and operations described herein is discussed with respect to FIG. 8, any of a variety of systems and/or processes may be utilized in accordance with embodiments of the disclosure. For example, the player may be automatically exited from a game and back to the game selection screen if it is determined that they are away from the game machine through inactivity or other inputs. The elements depicted in FIG. 8 may also be interchangeable with other elements of FIGS. 1-7 and 9-16 as required to realize a particularly desired embodiment.

Referring to FIG. 9, a conceptual illustration of utilizing a timeline to move backward within an interactive game in accordance with various embodiments of the disclosure is shown. In many embodiments, a timeline may be utilized to allow a player to move backward within the game, even from the current location to any of a variety of different points throughout the game, up to the beginning area(s). A timeline system can be an incredibly useful tool for players who wish to revisit and replay previous areas in a game, offering them the flexibility to navigate the game's content on their own terms. After concluding a level or area, players might experience a cutscene that advances the story but then decide they want to go back to the beginning of that level to try it again. This could be motivated by a desire to achieve a higher score, collect missed items, discover hidden secrets, or complete challenges that they may have overlooked during their first play through. By using the timeline feature, players can quickly scrub back to the start of the level, bypassing any lengthy transitions or loading screens, allowing them to jump right back into the action with minimal interruption. This can be particularly satisfying for players who are striving to perfect their performance, master a level's mechanics, or explore every nook and cranny for additional rewards.

Another common reason a player may want to utilize the timeline feature is to share the gaming experience with others, such as a friend sitting next to them who wants to take a turn at trying to get a better score or achieve a different outcome in that same area. Instead of having to start the entire game over or navigate through menus to restart the level, the timeline allows the player to quickly rewind to the desired point, enabling their friend to jump right into the gameplay without any hassle. This feature can foster a more collaborative and social gaming experience, making it easier for multiple players to enjoy the same content and compete with each other in real time. Additionally, the ability to revisit key moments can be valuable for players who want to learn from their mistakes, try out different strategies, or experiment with alternative approaches to tackling a boss fight or challenging segment, enhancing their overall mastery and enjoyment of the game.

Referring to FIG. 9, a diagram 900 depicting various subsets of artificial intelligence in accordance with various embodiments of the disclosure is shown. Artificial intelligence (AI) 910 is typically understood in the art to be the development of machines and algorithms that mimic human intelligence, for example, by optimizing actions to achieve certain goals. At its core, AI 910 often involves designing algorithms and models that mimic cognitive functions, such as learning, reasoning, problem-solving, perception, and even language understanding. Unlike traditional computer programs that follow a fixed set of instructions, AI systems have the ability to adapt, improve, and make decisions based on input data and environmental interactions.

AI 910 can be considered a generic term because it encompasses a wide range of subfields and techniques, from simple rule-based systems to advanced machine learning and deep learning models. These AI techniques are used to simulate various aspects of human cognition. For example, machine learning (ML) 920 allows computers to learn from data patterns without explicit programming for each task, while natural language processing (NLP) enables machines to understand and generate human language. Deep learning (DL) 930, a more advanced branch of AI, uses neural networks to automatically learn complex patterns from large datasets, akin to the human brain's information processing. This versatility makes AI a powerful tool across diverse applications, including image recognition, autonomous driving, voice assistants, healthcare diagnostics, and materials discovery.

A goal of AI is often to create systems that can function autonomously and intelligently in real-world scenarios. As AI 910 continues to evolve, it can increasingly mirror human-like cognition, enabling machines to not just process data but to "think" in a way that can handle uncertainty, make predictions, and even interact with their surroundings in a meaningful manner. While AI systems are far from achieving the full breadth of human intelligence, their ability to replicate specific cognitive functions makes them invaluable in tackling complex, data-driven challenges.

Machine Learning (ML) 920 is a subset of Artificial Intelligence (AI) 910 that focuses on the development of algorithms and statistical models that enable computers to learn and make decisions from data without explicit programming. In traditional programming, a computer is given a fixed set of rules to follow, but ML 920 can shift this paradigm by allowing systems to identify patterns, adapt, and improve their performance based on the data they encounter. This data-driven approach makes ML particularly valuable for tasks that are too complex or dynamic to define using straightforward rules, such as, for example, recognizing images, predicting consumer behavior, or diagnosing diseases. In various embodiments described herein, machine-learning methods may be utilized to control the display, usage, or other aspects about automatic player progression management of a timeline control system within an interactive game.

ML models can be configured to analyze large amounts of data to identify trends and relationships that inform their predictions or classifications. The process typically involves three stages: training, validation, and testing. During training, the model learns from a dataset by adjusting its internal parameters to minimize errors between its predictions and the actual results. Techniques like linear regression, decision trees, random forests, and Gaussian processes are commonly used in ML 920. These algorithms can handle various data types, including numerical, categorical, and structured datasets like spreadsheets or grids. One of the key strengths of ML is its ability to generalize from the training data to make accurate predictions on new, unseen data. In a number of embodiments described herein, training data may be generated from historical player data, developer inputs, quality assurance/testing feedback, among other sources.

However, traditional ML methods rely heavily on feature engineering, wherein human experts manually identify the most relevant features or patterns within the data. For example, when using ML 920 for image recognition, an expert might need to extract features like edges, textures, or color patterns before feeding them into a model. This requirement can limit the scalability of traditional ML approaches, especially when dealing with large, unstructured datasets such as images, text, or graphs. Additionally, ML algorithms may often work best when provided with relatively structured data, and they often need a reasonable amount of samples (typically more than 90) to learn effectively.

Deep Learning (DL) 930 is a specialized subset of Machine Learning (ML) 920 that employs multi-layered artificial neural networks to automatically learn complex patterns and representations from large, often unstructured datasets. Inspired by the way the human brain processes information, DL 930 consists of interconnected layers of "neurons" that can adaptively change as they are exposed to more data. Unlike traditional ML methods, which require manual feature engineering to identify key data characteristics, DL models can automatically extract features directly from raw data, such as images, text, or molecular structures. This automated feature extraction allows DL 930 to handle data types and tasks that were previously difficult or impossible for ML models to tackle effectively.

DL models, including Convolutional Neural Networks (CNNs), Graph Neural Networks (GNNs), and Recurrent Neural Networks (RNNs), excel at processing various forms of data. CNNs are particularly effective for image analysis, recognizing intricate patterns in visual inputs, making them indispensable in areas like materials science for analyzing microscopic images or detecting defects in materials. GNNs, on the other hand, are designed to work with graph-based data, such as molecular structures, social networks, or atomic interactions. They can learn the dependencies and relationships within graph-like structures, which is crucial for predicting properties of complex molecules and materials. RNNs and their variants, such as Long Short-Term Memory (LSTM) networks, are suited for sequential data like time series or natural language processing, allowing for the analysis and generation of textual information or the prediction of temporal patterns in scientific research.

One of the defining characteristics of deep learning is its requirement for large datasets (typically over 500 samples for example) to effectively train neural networks. The deep, multi-layered structure of these networks enables them to capture highly complex and abstract representations of the data, but it also demands significant computational power. Techniques like Variational Autoencoders (VAEs) and Generative Adversarial Networks (GANs) add to the versatility of DL by enabling the generation of new data samples that resemble the training set, aiding in areas such as materials discovery and synthetic data creation. Deep Reinforcement Learning (DRL) combines neural networks with decision-making processes to solve problems that involve optimization and control, further expanding DL's application potential. In summary, DL's ability to automatically learn from raw, unstructured data and model intricate patterns makes it a powerful tool in AI, particularly for complex domains like image recognition, natural language processing, and materials science.

Artificial Neural networks (ANNs or sometimes just NNs) are often a foundation of a DL system. The basic unit of a neural network is typically the perceptron, which can take inputs, assigns weights to these inputs, and combines them to produce an output. The final output is then passed through an activation function (such as, for example, ReLU, sigmoid, or hyperbolic tangent) to introduce non-linearity, which enables the network to model complex patterns.

Neural networks are typically trained through a process of backpropagation, where the system's predictions are compared against the known output, and a loss function is used to measure the difference between the prediction and the actual result. The network's weights can be adjusted through a process called gradient descent, which can be configured to minimize the loss function over time. However, the training process can be prone to problems like overfitting (where the model performs well on the training data but poorly on new data). To counter this, techniques such as regularization (e.g., regularization, dropout), early stopping, and mini-batches can be utilized to prevent the network from becoming overly specialized to the training set.

CNNs are a specific type of ML 920 neural network designed to work particularly well with image data, making them highly relevant for as image data can be generated within an interactive game and thus be subject to processing. As those skilled in the art will recognize, CNNs typically use specialized layers known as convolutional layers, which apply filters (also known as kernels) to the input data. These filters slide over the input (e.g., an image), detecting patterns like edges or textures, which are then passed to the next layer for further processing. The advantage of CNNs is their ability to automatically learn and extract relevant features from raw data without the need for manual feature engineering. Furthermore, pooling layers (e.g., max-pooling or average pooling) are often added after convolutional layers to reduce the dimensionality of the data, helping to make the system more efficient while retaining the most important information. After several layers of convolutions and pooling, the CNN can output a prediction, such as what locations within an interactive game would be good for determining when to automatically save player progression, and where to begin the game again upon a restart, etc.

While CNNs are well-suited for grid-based data like images, many real-world problems in can involve non-grid data, such as player/asset locations, player progression history, or player/asset interactions. This type of data may better be represented as a graph, where nodes represent entities (e.g., assets) and edges represent relationships between them (e.g., characteristics/timeline location values). Thus, Graph Neural Networks (GNNs) can be utilized to operate on such graph-based data.

In GNNs, information is passed between nodes through edges in a process called message passing. This allows the network to capture dependencies and relationships within the graph structure. The key feature of GNNs is their ability to aggregate information from neighboring nodes, which is crucial in predicting properties that depend on the current/local structure, such as the behavior of an asset or the properties of a timeline or player progression save point.

Generative models aim to learn the underlying distribution of a dataset and generate new samples that resemble the original data. Two common types of generative models are Variational Autoencoders (VAEs) and Generative Adversarial Networks (GANs). VAEs are often configured to work by encoding data into a lower-dimensional latent space and then decoding it back into its original form. This allows for the generation of new data by sampling points from the latent space. This can be utilized when attempting to automatically determine different locations to save a player's progress or the like.

Similarly, GANs consist of two components: a generator that creates fake/generated data and a discriminator that tries to distinguish between real and fake data. The two components are trained in a competitive process where the generator tries to "fool" the discriminator, leading to increasingly realistic generated data. This type of process may be utilized to compare actual player progression loading to potential or simulated player progression reloading scenarios.

Reinforcement Learning (RL) involves an agent learning to make decisions by interacting with an environment and receiving feedback (rewards or penalties) based on its actions. Deep Reinforcement Learning (DRL) combines RL with DL techniques, allowing agents to learn from high-dimensional inputs, such as images or complex player progression management simulations.

In interactive games, DRL can be used in scenarios where an optimal decision needs to be made, such as optimizing the restarting of a game upon restart by the player or finding the best configuration for asset loading based on the desired or current properties of the interactive game. The combination of RL and DL can allow for learning from raw data, making it a powerful tool for dynamic and real-time decision-making within an interactive game.

Although a specific embodiment for a diagram 900 depicting various subsets of artificial intelligence suitable for carrying out the various steps, processes, methods, and operations described herein is discussed with respect to FIG. 9, any of a variety of systems and/or processes may be utilized in accordance with embodiments of the disclosure. For example, other subset may be present and available for use within AI 910. Those skilled in the art will recognize that the diagram 900 presented in FIG. 9 is simplified for illustration purposes and various methods and techniques may interact with other areas (ML 920 with DL 930, etc.). The elements depicted in FIG. 9 may also be interchangeable with other elements of FIGS. 1-8 and 10-16 as required to realize a particularly desired embodiment.

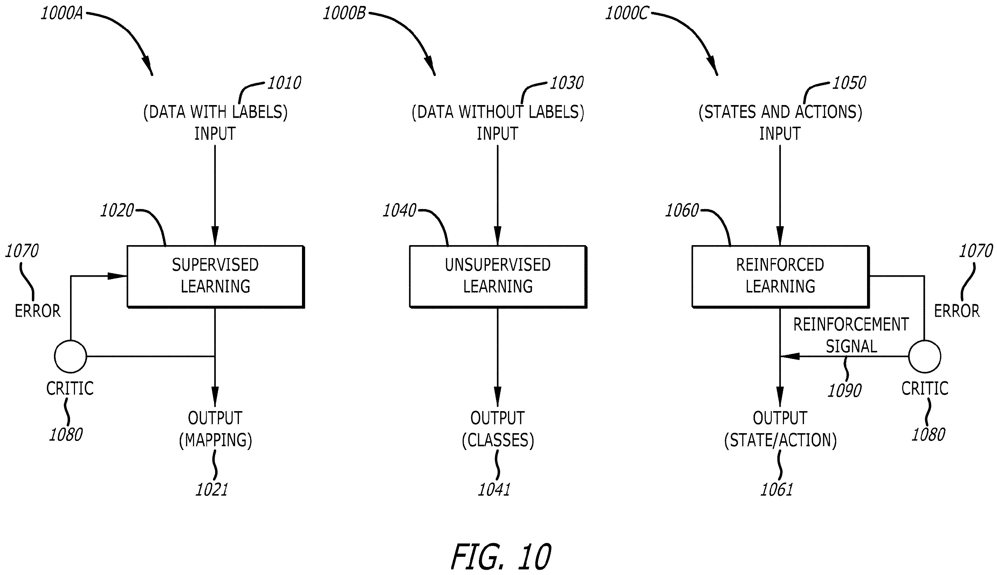

Referring to FIG. 10, different methods of machine-based learning in accordance with various embodiments of the disclosure are shown. In many embodiments, a machine learning model is defined as a mathematical representation of the output of the training process. A machine learning model is often considered similar to computer software designed to recognize patterns or behaviors based on previous experience or data. However, the learning algorithm can discover patterns within the training data, and output an ML model which can capture these patterns and make predictions on new data.

ML models can be understood as a device that has been trained to find patterns within new data and make predictions. These models can be represented as a complex mathematical function that would be impractical for a human to calculate that takes requests in the form of input data, makes predictions on input data, and then provides an output in response. First, these models can be trained over a set of data, and then they are provided an algorithm or other task to reason over data, extract the pattern from feed data and learn from that data. Once the model(s) is/are trained, they can be used to predict a new and previously unseen dataset.

There are various types of machine learning models available based on different business goals and data sets available. Often, based on the desired application, ML models can be configured as or settle into one of three different model types: supervised learning, unsupervised learning, and/or reinforcement learning. Supervised learning can further be broken down into two categories of classification and regression. Likewise, unsupervised learning can be divided into three categories: clustering, association rule, and/or dimensionality reduction.

In the embodiment depicted in FIG. 10, a supervised learning system 1000A is shown. The supervised learning system 1000A can be configured with a supervised learning model 1020 that accepts input data 1010 and generates an output 1021. However, the output data is often reviewed by a critic 1080 that can determine one or more errors 1070 that are fed back into the supervised learning model 1020 for use in updating.

Supervised learning systems 1000A are often considered the simplest machine learning model to understand in which input data (such as training data) has a known label or result as an output. So, the supervised learning model 1020 can be understood to work on the principle of input-output pairs. As such, a function can be trained using a training data set, which is then applied to unknown data and makes some predictive performance. Supervised learning is task-based and mostly tested on labeled data sets.

Supervised learning systems 1000A may often involve one or more regression problems. In regression problems, the output is a continuous variable. Some commonly used Regression models include linear regression, decision trees, and random forests. Linear regression is typically the most straight forward machine learning model in which a prediction of one output variable is made using one or more input variables. The representation of linear regression can be processed as a linear equation, which combines a set of input values (denoted as x) and a predicted output (denoted as y) for the set of those input values. As those skilled in the art will recognize, this may be represented in the form of a line: Y = bx+ c. A typical aim of a linear regression-based model can be to find the optimal fit line that best fits the available data points. Linear regression can be extended to multiple linear regressions (finding a plane of best fit in higher dimensional space) and polynomial regressions (finding the best fit curve).

Decision trees are also popular machine learning models that can be used for both regression and classification problems. A decision tree uses a tree-like structure of decisions along with their possible consequences and outcomes. In this, each internal node is used to represent a test on an attribute while each branch is used to represent the outcome of the test. The more nodes a decision tree has, the more accurate the result will be. This may be used when making decisions related to where and/or how to determine how to reload a game back upon player re-entry. The advantage of decision trees is that they are intuitive and easy to implement, but may lack accuracy depending on the available computational or time resources available.

Random forests are an ensemble learning method, which may consist of a large number of decision trees. For example, each decision tree in a random forest predicts an outcome, and the prediction with the majority of votes is considered as the outcome. A random forest model can be used for both regression and classification problems. For the classification task, the outcome of the random forest may be taken from the majority of votes. Whereas in the regression task, the outcome can be taken from the mean or average of the predictions generated by each tree.

Classification models are another type of supervised learning, which can be used to generate conclusions from observed values in one or more categorical forms. For example, a classification model can identify if an email is spam or not; whether a certain location within a game is suitable for reloading upon player re-entry, etc. Classification algorithms can also be used to predict between two or more classes and/or categorize an output into different groups. For these classification systems, a classifier model can be designed that classifies the dataset into different categories, and each category can subsequently be assigned a label. As those skilled in the art will recognize, there are currently two main types of classifications in machine learning: binary and multi-class. Binary classification can be utilized when there are only two possible classes (i.e., yes/no, dog/cat, etc.). Multi-class classification can be utilized when there are more than two possible classes, thus requiring a multi-class classifier.

One of the potential classification processes is logistic regression. Logistic regression can be used to solve various classification problems in machine learning systems. These processes are similar to linear regression but are often used to predict categorical variables. While some variations can be configured to generate a prediction as an output in either "yes" or "no", 0 or 1, "true" or "false", etc. However, in some embodiments, the system can instead be configured to not give exact values, but instead provide probabilistic values between zero and one, etc.

Another classification process that can be utilized is a support vector machine (SVM) which is widely used for classification and regression tasks. However, the main aim of SVM is to find the best decision boundaries in an N-dimensional space, which can be utilized to segregate data points into classes, and generate a best decision boundary often known as a hyperplane. SVM processes can select the extreme vector to find a hyperplane, wherein these vectors are known as support vectors.

Naive Bayes is another popular classification algorithm used in machine learning. This process receives its name as it is based on Bayes theorem and follows the naïve(independent) assumption between the features which is often given as the formula: $P \left(\left.y\right|X\right) = \frac{P \left(\left.X\right|y\right) ∗ P \left(y\right)}{P \left(X\right)}$

This formula takes a class or target y and a predictor attribute (X) and calculates a posterior probability P(y|X) of that class given a particular predictor. P(y) is the prior probability of that class, P(X) is the prior probability of the predictor, and P(X|y) is the likelihood or probability of the predictor given the class. As those skilled in the art will recognize, this may be more succinctly understood as the posterior chance being a result of the prior results times the likelihood divided by the evidence available. Each naive Bayes classifier assumes that the value of a specific variable is independent of any other variable/feature. For example, if a fruit needs to be classified based on color, shape, and taste. So yellow, oval, and sweet will be recognized as mango. Here each feature is independent of other features. Likewise, various embodiments herein can classify based on timeline status, player historical data, available resources, etc.

Again, in the embodiment depicted in FIG. 10, an unsupervised learning system 1000B is shown. The unsupervised learning system 1000B can be configured with an unsupervised learning model 1040 that accepts input data 1030 and generates an output 1041. Unlike other model types, there are no critics or error signals to process. Unsupervised learning models 1040 can implement the learning process opposite to supervised learning, which means it enables the model to learn from an unlabeled training dataset. Based on the unlabeled dataset, the unsupervised learning model 1040 can predict the output. Using an unsupervised learning system 1000B, the unsupervised learning model 1040 can learn hidden patterns from the dataset by itself without any supervision. In various embodiments, unsupervised learning models 1040 are often utilized to perform tasks involving clustering, association rule learning, and/or dimensional reduction.

Clustering is an unsupervised learning technique that involves clustering or grouping the available data points into different clusters based on similarities and/or differences. The objects or data points with the most similarities remain in the same group, and they have no or very few similarities from other groups. Clustering algorithms can be used in a variety of different tasks such as, but not limited to image segmentation, statistical data analysis, market segmentation, and the like. Some commonly used clustering algorithms that can be selected include K-means Clustering, hierarchal Clustering, DBSCAN, etc.

Association rule learning is an unsupervised learning technique which finds unique relations among variables within a large data set. In many embodiments, a primary aim of this type of learning algorithm is to find the dependency of one data item on another data item and map those variables accordingly so that it can satisfy some desired outcome. For example, in certain embodiments, an association rule system may be utilized to generate at least one location where a player can reload the game upon player re-entry. This algorithm can be applied in market basket analysis, web usage mining, continuous production, etc. However, those skilled in the art will recognize that other scenarios may be available based on the desired application. Some popular algorithms of association rule learning are Apriori Algorithm, Eclat, and FP-growth algorithm.

In additional embodiments, the number of features/variables present in a dataset can be understood as the dimensionality of the dataset, and the technique used to reduce the dimensionality is known as a dimensionality reduction technique. Although more data provides more accurate results, it can also affect the performance of the model/algorithm, such as yielding overfitting outcomes, etc. In such cases, dimensionality reduction techniques can be utilized. It is often desired that this process involves converting the higher dimensions dataset into lesser dimensions dataset while also ensuring that the ensuing results provide similar information. Different dimensionality reduction methods can be utilized, such as, but not limited to, PCA (Principal Component Analysis), Singular Value Decomposition (SVD), etc.

Finally, in the embodiment depicted in FIG. 10, a reinforcement learning system 1000C is shown. The reinforcement learning system 1000C can be configured with a reinforcement learning model 1060 that accepts input data 1050 and generates an output 1061. In reinforcement learning, the reinforcement learning model 1060 learns actions for a given set of states that lead to a goal state. In the embodiment depicted in FIG. 10, a critic 1080 can receive or otherwise notice an error 1070 within the reinforcement learning model 1060 actions, and adjust the outcome/output such that the "reward" or "punishment" is adjusted to better model the future behaviors or processing of the reinforcement learning model 1060.

It is a feedback-based learning model that can takes feedback signals after each state or action by interacting with the environment. This feedback works as a reward (positive for each good action and negative for each bad action), and the agent's goal is to maximize the positive rewards to improve their performance. The behavior of the model in reinforcement learning is similar to human learning, as humans learn things by experiences as feedback and interact with the environment. Popular methods of reinforcement learning including q-learning, state-action-reward-state-action (SARSA), and deep Q network.

Q-learning is one of the popular model-free algorithms of reinforcement learning, which is based on the Bellman equation. It often aims to learn the policy that can help the AI agent to take the best action for maximizing the reward under a specific circumstance. It can incorporate Q values for each state-action pair that indicate the reward to following a given state path, and it tries to maximize that Q-value.

SARSA is an on-policy algorithm based on the Markov decision process. In many embodiments, it can use the action performed by the current policy to learn the Q-value. The SARSA algorithm stands for State Action Reward State Action, which symbolizes the tuple (s, a, r, s', a'). Finally, deep Q neural networking (or DQN) is Q-learning within a neural network. It can be deployed within a big state space environment where defining a Q-table would be a complex task. So, in these embodiments, rather than using a Q-table, the neural network instead utilizes Q-values for each action based on the state.

Although a specific embodiment for different methods of machine-based learning suitable for carrying out the various steps, processes, methods, and operations described herein is discussed with respect to FIG. 10, any of a variety of systems and/or processes may be utilized in accordance with embodiments of the disclosure. For example, those skilled in the art will recognize that methods of learning described herein are generalized and may incorporate other types developed as well as a combination of one or more methods based on the goals of the desired application. The elements depicted in FIG. 10 may also be interchangeable with other elements of FIGS. 1-9 and 11-16 as required to realize a particularly desired embodiment.

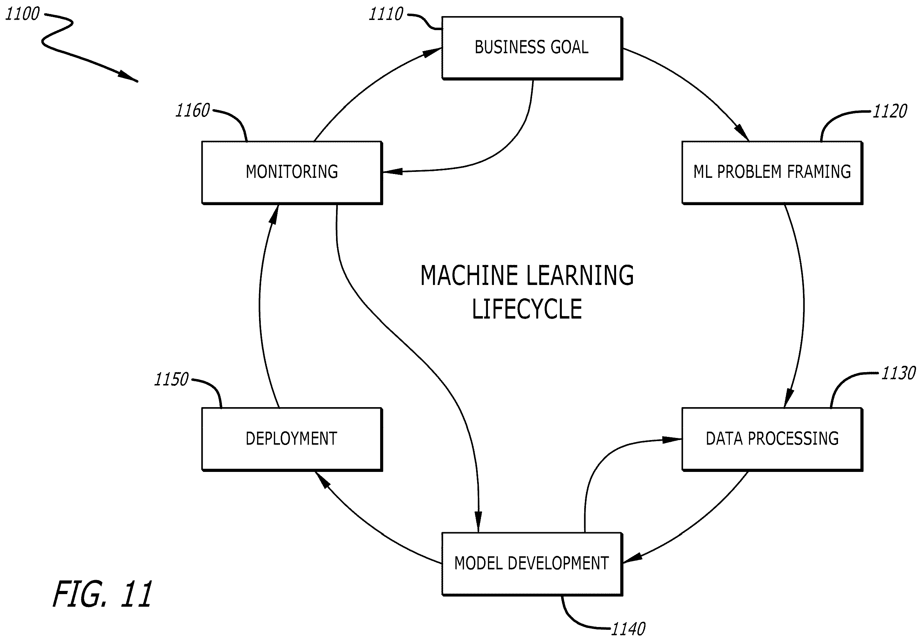

Referring to FIG. 11, a machine learning lifecycle 1100 in accordance with various embodiments of the disclosure is shown. During the development of machine learning systems, the embodiment depicted in FIG. 11 can provide a framework for how to structure the design and maintenance of these systems. This machine learning lifecycle 1100 outlines various stages involved in building, deploying, and improving ML models to solve real-world problems. By following this structured process, businesses and organizations can ensure that their machine learning projects align with strategic goals, use data effectively, and adapt to changing conditions over time. This machine learning lifecycle 1100 emphasizes that developing a machine learning model is not a one-time effort but an iterative process requiring ongoing monitoring and adjustment. The feedback loop inherent in the machine learning lifecycle 1100 allows for continual refinement and optimization of models to maintain their accuracy and relevance.

**In** many embodiments, a first stage of the machine learning lifecycle 1100 is identifying the business goal 1110, which sets the overall direction and purpose of the ML project. This can involve understanding the specific problems or opportunities within the business or project that machine learning can address. A clear business goal 1110 ensures that the project remains focused on delivering tangible value, whether it is improving player experiences, optimizing gametime operations, predicting player progression loading areas, or automating timeline and player progression management. Without a well-defined goal, it can be challenging to align the subsequent stages of the ML lifecycle 1100, as the choice of model, data processing methods, and performance metrics can all depend on what the business aims to achieve.

Establishing a proper business goal 1110 can also involve engaging with key stakeholders and developers to gather requirements and set success criteria. It can provide a roadmap that outlines what success looks like and helps in framing the ML problem. For example, if the goal is to reduce processor overhead, the project might focus on building a predictive model that identifies potential bottlenecks, allowing the game engine to intervene proactively. Clearly defined goals not only help guide the project but also provide benchmarks for evaluating the effectiveness of the deployed model once it enters production.

Once the business goal 1110 is established, various embodiments take a next step involving ML problem framing 1120, wherein the goal is translated into a specific machine learning task. This can involve selecting the appropriate type of ML problem, such as classification, regression, clustering, or recommendation, and defining the target variables or outputs. For example, if the goal is to identify processor bottlenecks, the problem can be framed as a binary classification task where the model predicts whether a certain number of assets required for reloading a game state will cause the game engine to slow down. Proper problem framing can be important as it determines the particular data requirements, choice of model, and evaluation metrics.

During this stage, it is also prudent to consider the constraints and assumptions that may affect the model's development. This might include data availability, computational resources, ethical considerations, or regulatory compliance. Properly framing the problem ensures that the model development aligns with the business's needs and that the problem is broken down into manageable steps, ultimately increasing the project's chances of success.

Data processing 1130 is a step in many embodiments where raw data is collected, cleaned, and transformed into a format suitable for machine learning. This step can involve gathering data from various sources, removing errors or inconsistencies, handling missing values, and normalizing or scaling features to ensure that the model can learn effectively. Feature engineering is often a part of this stage, where new features are derived from the raw data to capture more relevant information and improve model performance.

The quality and preparation of the utilized data can significantly impact the model's accuracy and reliability. Inadequate or poorly processed data can lead to biased or inaccurate predictions, no matter how advanced the model is. Hence, data processing 1130 can require or at least benefit from careful planning and iterative refinement. Once the data is processed, it is typically split into training, validation, and test sets to develop and evaluate the model, ensuring that it generalizes well to new, unseen data.

Model development 1140 is a phase in a number of embodiments where machine learning algorithms are selected, trained, and refined to create a model that addresses the framed problem. This stage can involve choosing the appropriate algorithm (e.g., decision trees, neural networks, support vector machines), setting up the model's architecture, and defining hyperparameters that will guide the training process. The model is trained on the processed data to identify patterns and relationships that allow it to make predictions or decisions.

During model development 1140, the model can be evaluated using the validation dataset to fine-tune its parameters and improve performance. Techniques like cross-validation, regularization, and hyperparameter tuning can be used to prevent overfitting and ensure the model generalizes well. If proper steps are taken, the result is a model that, once it meets predefined performance metrics, is ready for deployment in a real-world environment. However, this process often involves several iterations to optimize the model for the specific business goal, indicated by the arrow back to data processing 1130.

In further embodiments, deployment 1150 is the stage where the developed model is integrated into the production environment to perform its intended tasks. This phase may involve setting up the necessary infrastructure, such as APIs or cloud-based services, to allow the model(s) to process live data and generate predictions. Deployment 1150 can transform the model from a research tool into a functional component of a business process or product, providing real-time insights, automations, or decisions.

Proper deployment 1150 can also include setting up mechanisms for logging, error handling, and user access. Since real-world environments are often dynamic and differ from training conditions, deployment may require continuous adaptation and updates to ensure the model(s) operates efficiently. This step can be important because a model's success is not only determined by its performance metrics but also by its ability to provide actionable results that align with the business goal 1110.

In more embodiments, monitoring 1160 is the ongoing process of tracking the model's performance and behavior after deployment. It involves collecting data on the model's predictions, accuracy, latency, and error rates to detect issues such as concept drift, where changes in the underlying data patterns can degrade the model's accuracy. By continuously monitoring 1160, teams can identify when the model's performance drops and requires retraining or adjustments to align with the evolving data.

Monitoring 1160 can also encompass aspects like user feedback, security, and compliance, ensuring that the model remains effective, reliable, and ethical in its application. It may serve as the feedback loop in the lifecycle, where insights gained from monitoring feed back into the earlier stages, particularly data processing 1130 and model development 1140, to refine the model(s) as needed. This iterative process allows the machine learning system to adapt and maintain its alignment with the original business goal 1110 over time.

Although a specific embodiment for a machine learning lifecycle 1100 suitable for carrying out the various steps, processes, methods, and operations described herein is discussed with respect to FIG. 11, any of a variety of systems and/or processes may be utilized in accordance with embodiments of the disclosure. For example, the particular route of development of the model(s) may not follow this cycle completely. As those skilled in the art will recognize, there are a variety of ways to develop AI products that include various iterative steps that aide in development and refinement of different model(s). The elements depicted in FIG. 11 may also be interchangeable with other elements of FIGS. 1-10 and 12-16 as required to realize a particularly desired embodiment.

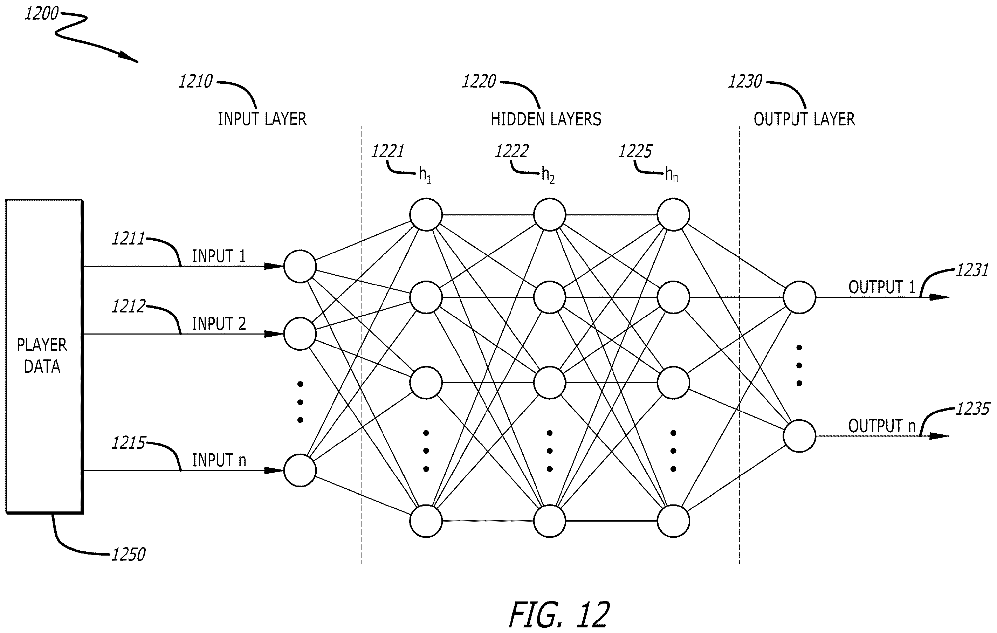

Referring to FIG. 12, an exemplary neural network 1200 in accordance with various embodiments of the disclosure is shown. The embodiment depicted specifically depicts a feedforward neural network with multiple layers. This type of network consists of an input layer 1210, one or more hidden layers 1220, and an output layer 1230. Each layer contains nodes (or neurons) that are interconnected, representing how data flows through the network. The input layer 1210 can receive raw data, which is then processed by the hidden layers 1220 through weighted connections and activation functions. These hidden layers 1220 can enable the network to learn complex patterns and relationships within the data.

The final output layer 1230 produces the network's predictions or classifications based on the processed input. The interconnected nature of the nodes allows the neural network 1200 to learn from data during training by adjusting the weights of connections to minimize prediction errors. This structure is the foundation of deep learning models, as adding more hidden layers 1220 can create a deep neural network, capable of tackling highly complex tasks such as image recognition, natural language processing, and pattern detection in large datasets.

A perceptron or a single artificial neuron is the building block of artificial neural networks (ANNs) and can perform forward propagation of information. For a set of inputs to the perceptron, weights (and biases to shift wights) can be assigned. These inputs and weights can be multiplied out correspondingly together to get a sum output. Those skilled in the art will recognize tools such as, but not limited to, PyTorch, Tensorflow, and MXNet as training packages for common neural network tasks. However, it is contemplated that other tools may be developed specifically for the neural network tasks related to the embodiments described herein.

In additional embodiments, the weight matrices of a neural network can be initialized randomly or obtained from a pre-trained model. These weight matrices can be multiplied with the input matrix (or output from a previous layer) and subjected to a nonlinear activation function to yield updated representations, which are often referred to as activations or feature maps. The loss function (also known as an objective function or empirical risk) can often be calculated by comparing the output of the neural network and the known target value data.

Feedforward networks, such as the neural network 1200 depicted in the embodiment of FIG. 12, are often configured as neural networks where information moves in one direction, from the input layer through the hidden layers to the output layer, without any cycles or loops. They are primarily used for tasks such as classification, regression, and simple pattern recognition, where each input is processed independently of others. In contrast, backpropagation is not a separate type of network but rather a training algorithm commonly used in both feedforward and other types of networks, like recurrent neural networks (RNNs).

Backpropagation involves adjusting the weights of the network in the reverse direction (from output to input) based on the error between the predicted output and the actual target during training. While feedforward describes the structure and data flow within the network, backpropagation is a technique used to optimize the model. Feedforward networks are ideal for straightforward tasks where input-output relationships are not sequential or time-dependent. However, for problems involving learning complex patterns over time, such as speech recognition or time-series analysis, networks that leverage backpropagation for training, like RNNs or deep feedforward networks with many hidden layers, become necessary to capture these intricate dependencies.

Typically, in these network arrangements, the weights are iteratively updated via various methods including, but not limited to, stochastic gradient descent algorithms in order to help minimize the loss function until the desired accuracy is achieved. Most modern deep learning frameworks can facilitate this by using reverse-mode automatic differentiation to obtain the partial derivatives of the loss function with respect to each network parameter through recursive application of the chain rule. Colloquially, this is also known as back-propagation. Common gradient descent algorithms can include, but are not limited to, Stochastic Gradient Descent (SGD), Adam, Adagrad etc. The learning rate is an important parameter in gradient descent. Except for SGD, all other methods use adaptive learning parameter tuning. Depending on the objective such as classification or regression, different loss functions such as Binary Cross Entropy (BCE), Negative Log Likelihood Loss (NLLL) or Mean Squared Error (MSE) can be used.

Neural network architecture is commonly used for a wide range of tasks in fields such as computer vision, natural language processing, financial forecasting, and materials science. For instance, it can be employed to recognize patterns in images, such as identifying objects or faces, or to classify text into categories, like spam detection in emails. It is also useful in regression problems, such as predicting stock prices or energy consumption, where input features can be processed to output continuous values. However, this is a general example of an artificial intelligence (AI) model, illustrating how a feedforward neural network works. Depending on the problem, other methods and models may be more appropriate. For example, convolutional neural networks (CNNs) are often used for image processing tasks, while recurrent neural networks (RNNs) are suitable for sequential data like time series data or text. Additionally, simpler models like linear regression, decision trees, or support vector machines (SVMs) may be sufficient if the problem is less complex, or the dataset is relatively small. The embodiment depicted in FIG. 12 is presented as an exemplary ML solution that may be deployed within one or more methods or systems described herein.

In many embodiments, the input layer 1210 is the first layer in a neural network 1200 and serves as the initial point where raw data is introduced into the model. Each node (or neuron) in this layer represents an individual feature or variable from the dataset, allowing the network to receive and process various types of data, such as pixel values in an image, numerical features in a spreadsheet, or words in a text document. For instance, in image recognition tasks, the input layer can consist of nodes that correspond to the pixel values of the image, providing the network with the visual information needed to identify objects or patterns. The number of nodes in the input layer directly depends on the number of features present in the dataset. If there are one-hundred features in the data, the input layer will typically have one-hundred nodes, each conveying one piece of the information to the subsequent layers. In more embodiments, the inputs of the neural network 1200 are generally scaled i.e., normalized to have a zero mean and/or unit standard deviation. Scaling can also be applied to the input of hidden layers (using batch or layer normalization) to improve the stability of neural network 1200.

Unlike the hidden layers 1220 and output layers 1230, the input layer 1210 typically does not perform any computations or transformations on the data. Its primary function is often to pass the input data to the next layer in the network, the first hidden layer 1221. However, it is often desired that the data fed into this layer is preprocessed appropriately, such as being normalized or standardized, to ensure that the neural network can learn efficiently. Proper preprocessing, like scaling numerical values or encoding categorical variables, can help the network process data uniformly, facilitating more stable and faster convergence during training.

The input layer's design depends on the nature of the problem. For example, in natural language processing, the input layer may represent words encoded as numerical vectors, while in time-series analysis, each node might represent a data point in a sequence. While the input layer 1210 itself does not modify the data, it sets the stage for the neural network to extract complex patterns and relationships through the deeper layers. This flexibility in handling various types of input make the neural network 1200 a powerful tool for a diverse set of applications.

With respect to the embodiments described herein, the input layer may be configured with a plurality of inputs providing player data 1250, player attributes/parameters or other data sources. For example, a model can be configured with a first input 1211 configured as a first potential location in the game, a second input 1212 is configured with a second potential location, while additional inputs can be added related to the number of potential locations for reloading or restarting a game in response to a player re-entering the game within the timeline system. The nth input 1215 can be configured in certain embodiments to include the current or last known location that the player is in such that a determination to keep the current timeline in place may be possible. However, as those skilled in the art will recognize, additional setups can be configured such that the inputs can be configured to also include different parameters of the timeline, the number of assets or points of interest in the scene, known spoilers, available branches, among other input types, etc.

In a number of embodiments, the neural network 1200 comprises a plurality of hidden layers 1220. The embodiment depicted in FIG. 12 comprises a first hidden layer 1221, a second hidden layer 1222, and an nth hidden layer 1225, which are denoted as h₁, h₂, and hₙ respectively. In many embodiments, the hidden layers 1220 are where the core of the model's learning and pattern recognition occurs. In each hidden layer, individual neurons receive inputs from the previous layer, apply a set of weights, add a bias, and pass the result through an activation function (e.g., ReLU, leaky ReLU, sigmoid, hyperbolic tangent (tanh), Swish, etc.). This process can introduce non-linearity, allowing the network to capture complex patterns in the data that simple linear models cannot. The intricate web of connections among neurons across layers helps the network transform and process input features into representations that become progressively more abstract and useful for making predictions.

The first hidden layer 1221 h₁ receives direct input from the input layer, transforming the raw data into an initial set of features. For example, in an image recognition task, this layer might begin identifying basic patterns, such as edges or simple textures. The output of the first hidden layer 1221 is then passed to a second hidden layer 1222 h₂, which builds upon the features identified by the first hidden layer 1221. This deeper layer might start recognizing more complex patterns, such as shapes or specific object components, by combining the lower-level features identified earlier. This can continue on until a last, nth hidden layer 1225 hₙ continues this abstraction process, allowing the network to recognize even higher-level, more detailed features, such as identifying an entire object within an image or understanding intricate relationships in the input data.

Each hidden layer adds a level of complexity and abstraction to the network's learning capabilities. The multi-layer structure can enable the network to move from recognizing simple patterns in the first input layer 1221 to highly complex, abstract concepts in the deeper layers. The number of hidden layers and neurons within them can vary depending on the problem's complexity. More hidden layers generally allow the network to model more intricate functions, making deep neural networks especially effective for tasks like image recognition, natural language processing, and complex predictive modeling. However, adding more layers also increases the computational demand and the risk of overfitting, highlighting the need to carefully design and tune these hidden layers for optimal performance.

In various embodiments, the output layer 1230 is often the final layer in a neural network and is responsible for producing the network's predictions or classifications based on the information processed through the previous hidden layers 1220. Each neuron in the output layer 1230 can represent a specific outcome or category that the model can predict. In the embodiment depicted in FIG. 12, the outputs are labeled as "output 1" to "output n," indicating that the network can be designed to have a varying number of outputs depending on the nature of the problem being solved for. For example, in a binary classification task (e.g., setting a restart point vs. not setting a restart point), there would typically be a single output neuron that provides a probability score for one of the two classes/outcomes. In contrast, for multi-class classification (e.g., categorizing a location within the timeline that is suitable for allowing the player to restart upon re-entry into the game), the output layer would contain multiple neurons, each corresponding to a different class.

The number of neurons in the output layer 1230 can also designed specifically for other types of tasks, such as regression, where the model can predict continuous values. In such cases, the output layer 1230 might contain a single neuron representing a numerical prediction, such as the price of a house or the temperature forecast, etc. Alternatively, in complex applications like multi-label classification (where each input can belong to multiple classes simultaneously), the output layer 1230 could have multiple neurons, each representing a different class, with each neuron outputting a probability of the input belonging to that specific class.

The activation function used in the output layer can vary based on the desired output. For binary classification, a sigmoid function is commonly used to produce a probability between 0 and 1. For multi-class classifications, a SoftMax function can be applied to output a set of probabilities that sum to 1, indicating the most likely class. For regression problems, a linear activation function is often used to output a continuous range of values. The flexibility in designing the output layer allows the neural network 1200 to be applied to a wide variety of tasks, from simple binary decisions to complex multi-output predictions, making them a versatile tool in artificial intelligence and machine learning.

Although a specific embodiment for an exemplary neural network suitable for carrying out the various steps, processes, methods, and operations described herein is discussed with respect to FIG. 12, any of a variety of systems and/or processes may be utilized in accordance with embodiments of the disclosure. For example, real-world neural networks are often far more complex, featuring many more layers, nodes, and connections than the simplified structure shown in the embodiment depicted in FIG. 12, which is an illustrative example meant to make it easier to explain the basic concepts of neural networks and how they process information. The specific features and functions described herein are not intended to be limiting to this specific embodiment. Additionally, the elements depicted in FIG. 12 may also be interchangeable with other elements of FIGS. 1-11 and 13-16 as required to realize a particularly desired embodiment.

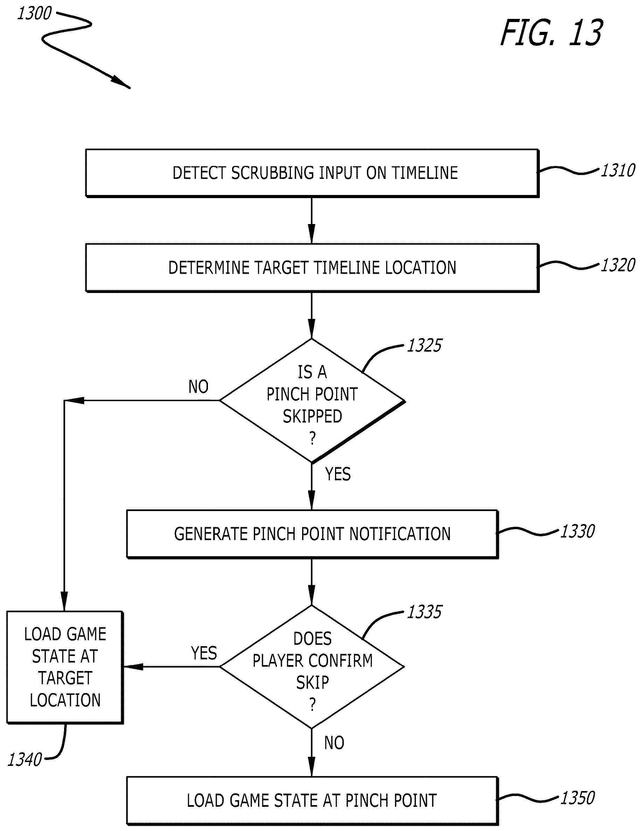

Referring to FIG. 13, a flowchart of a process 1300 for detecting timeline scrubbing input and managing pinch point notifications in accordance with various embodiments of the disclosure is shown. In many embodiments, the process 1300 can detect scrubbing input on timeline (block 1310). This detection of the scrubbing input on timeline can be initiated by receiving a specific command from a player controller, such as a hold and scroll command, a trigger press, or a gesture on a touch screen interface. Once the process 1300 recognizes the scrubbing input on timeline, it can activate a timeline overlay that visually represents the game's chronological structure, including key events, cutscenes, and gameplay segments. The timeline overlay provides immediate visual feedback to the player, often dimming the current game scene or pausing the action to focus the player's attention on the navigation interface. This initial step is crucial for transitioning the player from active gameplay into a navigation mode where they can manipulate the flow of the game's events.

In a number of embodiments, the process 1300 can determine target timeline location (block 1320). After detecting the input, the process 1300 calculates the precise point on the timeline where the player intends to navigate, often based on the position of a cursor or scrubber icon relative to the timeline's length. This target timeline location corresponds to a specific timestamp or event marker within the game's progression data, representing a distinct state of the game world. The determination of the target timeline location may involve snapping the cursor to the nearest logical start point of a scene or event to ensure a smooth transition, rather than landing in an arbitrary or unstable game state. By accurately identifying this target timeline location, the process 1300 ensures that the subsequent loading and state reconstruction steps are directed toward a valid and playable moment in the game's history.

In further embodiments, the process 1300 can determine is a pinch point skipped (decision block 1325). This decision involves analyzing the segment of the timeline between the player's current location and the determined target timeline location to see if any mandatory narrative events, known as pinch points, are located within that span. A pinch point represents a critical story beat, tutorial, or gameplay sequence that the developer has designated as essential for the player to experience to maintain narrative coherence or gameplay competence. If the process 1300 identifies that the movement to the target timeline location would bypass such a pinch point, it flags this action as a potential skip of mandatory content. Conversely, if no pinch point is found in the traversed segment, the process 1300 can proceed directly to loading the new game state without interruption.

If it is determined that a pinch point is not skipped, the process 1300 can load game state at target location (block 1340). This step involves retrieving all necessary data associated with the target timeline location, including player stats, inventory, world state, and active objectives. The process 1300 efficiently unloads the assets from the current scene and streams in the required assets for the target timeline location to minimize wait times. Once the data is loaded, the game engine reconstructs the scene exactly as it should appear at that specific moment in the timeline, placing the player character in the correct position and resetting any relevant environmental variables. This seamless transition allows the player to resume gameplay immediately from their chosen point, maintaining immersion and continuity.

However, if it is determined that a pinch point is skipped, the process 1300 can generate pinch point notification (block 1330). In this scenario, the process 1300 interrupts the immediate jump to the target timeline location and displays a warning or informational message to the player. This pinch point notification informs the player that their intended navigation will cause them to miss a significant story event or gameplay segment. The notification may provide details about the nature of the skipped content, such as a text warning stating that the player is about to bypass a key plot revelation or mandatory tutorial, ensuring the player is fully informed of the consequences of their action. The generation of the pinch point notification serves as a safeguard to prevent accidental progress loss or narrative confusion.

In still more embodiments, the process 1300 can determine does player confirm skip (decision block 1335). After presenting the pinch point notification, the process 1300 awaits a specific input from the player to verify their intent. The player is typically presented with options to either proceed with the skip despite the warning or to cancel the action and perhaps jump to the pinch point instead. This confirmation step ensures that the player retains agency over their experience while acknowledging the potential downside of missing the content. If the player chooses to confirm the skip, the process 1300 respects this decision and proceeds to load the game at the originally selected target timeline location.

If it is determined that the player confirms the skip, the process 1300 can load game state at target location (block 1340). Upon receiving the confirmation, the process 1300 overrides the pinch point restriction and executes the timeline jump as originally requested. This action demonstrates the system's flexibility in allowing players to tailor their experience, even if it means bypassing content deemed important by the developers. The system then performs the necessary data retrieval and asset loading to place the player at the target timeline location. The game then resumes from that new point, treating the skipped pinch point as having been bypassed by user choice.

However, if it is determined that the player does not confirm skip, the process 1300 can load game state at pinch point (block 1350). In this case, the process 1300 interprets the lack of confirmation (or an explicit rejection selection) as a desire to experience the mandatory content. Instead of jumping to the originally selected target timeline location, the system adjusts the destination to the beginning of the identified pinch point. The process 1300 then retrieves the game state data associated with the start of that pinch point, ensuring the player experiences the critical narrative or gameplay event. This redirection ensures that the narrative flow is preserved and that the player does not inadvertently miss essential parts of the game experience.

Although a specific embodiment for a process 1300 for detecting timeline scrubbing input and managing pinch point notifications suitable for carrying out the various steps, processes, methods, and operations described herein is discussed with respect to FIG. 13, any of a variety of systems and/or processes may be utilized in accordance with embodiments of the disclosure. For example, the pinch point notification could be configured to automatically play a summary of the skipped content instead of a simple text warning. Additionally, the process 1300 could be adapted to allow players to queue multiple pinch points for sequential viewing if a large segment of the timeline is skipped. The determination of whether a pinch point is skipped could also factor in whether the player has previously completed that content in a different playthrough, potentially suppressing the notification for veteran players. The elements depicted in FIG. 13 may also be interchangeable with other elements of FIGS. 1-12 and 14-16 as required to realize a particularly desired embodiment.

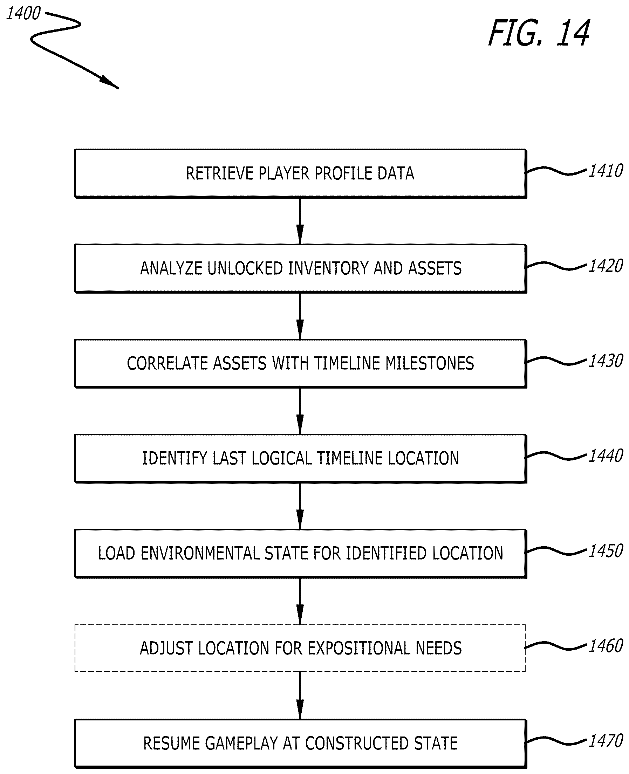

Referring to FIG. 14, a flowchart of a process 1400 for constructing a game state at a target timeline location based on player profile data in accordance with various embodiments of the disclosure is shown. In many embodiments, this process 1400 may be designed to facilitate player progression recovery or cross-platform resuming where a specific save file might not be immediately available or compatible. By examining the data that is available, the system can intelligently rebuild the game world to match the player's last known achievements and status. This capability may ensure that the player can re-enter the game flow seamlessly without losing significant progress or being placed in an erroneous location within the narrative.

In a number of embodiments, the process 1400 can retrieve player profile data (block 1410). This step may typically involve querying a local or remote database to access the persistent metadata associated with the player's account, such as achievement flags, character statistics, and global variables. Once this raw data is obtained, the system can begin the complex task of interpreting what these variables mean in the context of the game's timeline. The retrieval of player profile data can be considered a foundational step that provides the raw materials necessary for the subsequent reconstruction of the game state.

In more embodiments, the process 1400 can analyze unlocked inventory and assets (block 1420). This analysis can examine the specific items, weapons, key cards, or abilities that the player currently possesses to establish a set of progression markers. For example, if the player profile data indicates possession of a unique item dropped only by a specific mid-game boss, the system may allow the logic to infer that the timeline location must be subsequent to that boss encounter. By meticulously checking each unlocked item, the system can create a logic map that eliminates impossible timeline locations and highlights probable ones.

In additional embodiments, the process 1400 can correlate assets with timeline milestones (block 1430). During this step, the system may compare the analyzed inventory and assets against a master list of game events and their required prerequisites. This correlation can help to establish a valid range of potential locations on the timeline where the player could logically be situated based on what they own and what they have accomplished. This step essentially can triangulate the player's position by cross-referencing their inventory list with the game's chronological structure.

In further embodiments, the process 1400 can identify last logical timeline location (block 1440). This identification may select the most advanced point on the timeline that is consistent with the player's inventory, effectively calculating where the player left off even if the explicit save coordinate is missing. The system can use a hierarchy of logic to determine the most likely point of exit, prioritizing narrative milestones over minor side quest completions. This can ensure that the player is returned to the forefront of their progression rather than being set back to an earlier, less relevant point in the game.

In still more embodiments, the process 1400 can load environmental state for identified location (block 1450). This may involve initializing the game engine to render the specific level, lighting, weather, and enemy configurations that correspond to the calculated timeline point. The game engine can retrieve the necessary asset packages and geometry to reconstruct the visual and physical world around the player. This loading process can be critical for ensuring that the player steps back into a world that looks and feels correct for their specific stage in the game.

In yet further embodiments, the process 1400 can adjust location for expositional needs (block 1460). This optional step can allow the system to fine-tune the player's spawn point, perhaps moving them slightly back to ensure they witness a context-establishing scripted event or dialogue that they might otherwise miss if spawned directly at the raw coordinate. The system may evaluate the narrative context of the identified location and determine if a slight adjustment is necessary to preserve the storytelling flow. This can ensure that the narrative flow remains coherent and that the player is reoriented correctly within the story.

In various embodiments, the process 1400 can resume gameplay at constructed state (block 1470). This action may transfer control back to the player, placing them into the dynamically reconstructed scenario that matches their profile history. The game engine can activate the physics, AI, and input systems, allowing the player to immediately begin interacting with the world. Because the state is built from verified profile data rather than a potentially corrupted snapshot, this method can provide a robust failsafe for game progression.

Although a specific embodiment for a process 1400 for constructing a game state at a target timeline location based on player profile data suitable for carrying out the various steps, processes, methods, and operations described herein is discussed with respect to FIG. 14, any of a variety of systems and/or processes may be utilized in accordance with embodiments of the disclosure. For example, the process 1400 could be configured to prioritize cloud-based achievement data over local inventory files if a discrepancy is detected between the two sources. Additionally, the correlation step could be weighted to favor main story items over optional collectibles when determining the primary timeline location. The elements depicted in FIG. 14 may also be interchangeable with other elements of FIGS. 1-13 and 15-16 of the disclosure as required to realize a particularly desired embodiment.

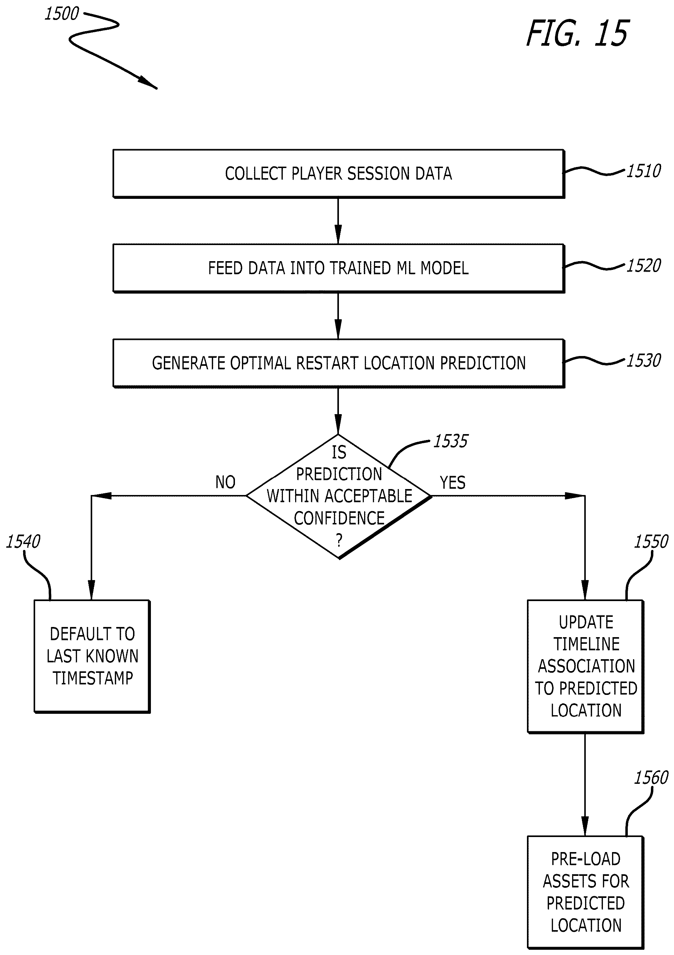

Referring to FIG. 15, a flowchart of a process 1500 for generating an optimal restart location prediction using a trained machine learning model in accordance with various embodiments of the disclosure is shown. In many embodiments, this process 1500 can be designed to facilitate an intelligent save system that adapts to player behavior rather than relying solely on rigid checkpoints. By analyzing how a player interacts with the game, the system may infer the most logical place for them to resume gameplay. This predictive capability can transform the static concept of a save file into a dynamic entry point that evolves with the player's style. Such an approach may significantly reduce the friction often associated with reloading a game after a break.

In a number of embodiments, the process 1500 can collect player session data (block 1510). This step may involve aggregating a wide variety of telemetry points generated during the player's active gameplay sessions. The system can record specific metrics such as movement patterns, inventory management decisions, or time spent in specific zones. This data collection can be crucial for building a comprehensive context of the player's current objectives within the game world. Without this rich dataset, the machine learning models might lack the necessary fidelity to make accurate predictions about user intent.

In more embodiments, the process 1500 can then feed data into trained ML model (block 1520). Once the raw session data is collected, it may be pre-processed and normalized into a feature vector suitable for analysis. This step essentially transfers the current game context into the machine learning environment where it can be processed against historical patterns. The trained ML model might have been developed using vast amounts of data to recognize common stopping points and logical resumption needs. This feeding process can allow the model to evaluate the current scenario against its learned knowledge base.

In some embodiments, the process 1500 can generate optimal restart location prediction (block 1530). The model may output a specific coordinate, timestamp, or event ID that represents the estimated best place for the player to re-enter the game. This prediction might suggest placing the player at the start of a boss battle they just lost, rather than at a distant save point. The generation of the optimal restart location prediction can be designed to maximize player engagement and minimize backtracking. Alongside the location, the model may typically assign a probability score indicating how certain it is that this location is the correct choice.

In further embodiments, the process 1500 can determine is prediction within acceptable confidence (decision block 1535). This decision can act as a quality control gate by comparing the probability score against a pre-determined confidence threshold. If the model is unsure, perhaps because the player's behavior was erratic, the system may flag the prediction as potentially unsafe. This verification step can be essential to prevent the game from spawning a player in a location that feels disorienting. Only predictions that meet the high standards of the confidence threshold might be allowed to influence the actual game state.

If it is determined that the prediction is not within acceptable confidence, the process 1500 can default to last known timestamp (block 1540). In this scenario, the system may fall back to the traditional method of loading the game from the most recent valid save. This ensures that player progress can be preserved even if the AI prediction is discarded. The default to last known timestamp provides a reliable safety net for the game's progression system. This conservative approach can prioritize data integrity over the potential convenience of a smart restart.

However, if it is determined that the prediction is within acceptable confidence, the process 1500 can update timeline association to predicted location (block 1550). Here, the system may officially override the standard save pointer and link the player's profile to the smart location identified by the model. This update can modify the metadata associated with the player's account so that the continue function triggers this specific timeline point. By updating the timeline association to predicted location, the system effectively curates the player's experience. This action may commit the prediction to the database for the next session.

In certain embodiments, the process 1500 can pre-load assets for predicted location (block 1560). With the target location confirmed, the game engine may begin streaming in the necessary textures and audio files required for that specific scene. This pre-loading can happen in the background while the player is exiting the game or navigating the menus. The pre-load assets for predicted location step allows the transition back into gameplay to be as seamless as possible. This technical optimization can complement the logic of the smart save system to create a fluid user experience.

Although a specific embodiment for a process 1500 for generating an optimal restart location prediction using a trained machine learning model suitable for carrying out the various steps, processes, methods, and operations described herein is discussed with respect to FIG. 15, any of a variety of systems and/or processes may be utilized in accordance with embodiments of the disclosure. For example, the model could be trained to offer multiple restart options to the player instead of automatically selecting one. Additionally, the confidence threshold could be dynamic, adjusting based on the player's history of accepting or rejecting previous smart restart suggestions. The elements depicted in FIG. 15 may also be interchangeable with other elements of FIGS. 1-14 and 16 of the disclosure as required to realize a particularly desired embodiment.

Referring to FIG. 16, a flowchart of a process 1600 for executing a timeline jump and loading associated game assets in accordance with various embodiments of the disclosure is shown. In many embodiments, this process 1600 can be configured to manage the complex technical requirements of moving a player instantly between different points in a game's narrative. By systematically reconstructing the game state, the system may allow players to skip large sections of gameplay without breaking the logical consistency of the world. This seamless transition capability is often a core feature of the timeline control system, distinguishing it from traditional save-load mechanics. The process 1600 ensures that all necessary data is synchronized before handing control back to the user.

In a number of embodiments, the process 1600 can receive confirmed timeline jump request (block 1610). This request typically originates from the player interacting with the timeline interface and verifying their desire to move to a new location. The system can treat this input as a high-priority command that overrides current gameplay states to initiate the transition. Upon receipt, the game engine might pause active rendering to prepare for the data retrieval and loading procedures. This step ensures that the system has clear authorization to discard the current state and begin the reconstruction process.

In some embodiments, the process 1600 can determine nearest preceding pinch point to target (block 1620). The system may scan the timeline data to find a stable anchor point that exists prior to the user's selected destination. This backward search helps the engine locate a reliable known good state from which to build the specific target state. By identifying this pinch point, the system can avoid calculating the entire game state from scratch, saving computational resources. This step is often essential for maintaining logical consistency in the game world as it establishes a baseline for the environment.

In further embodiments, the process 1600 can load base game assets associated with pinch point (block 1630). This action involves retrieving the core environmental data, geometry, and textures linked to the identified anchor. The system might prioritize these heavy assets to ensure the world structure is in place before populating it with dynamic details. Loading these base assets allows the foundation of the scene to be constructed efficiently within the device's memory. This step effectively sets the stage upon which the specific player state will be layered.

In more embodiments, the process 1600 may retrieve player progression history data (block 1640). This step involves accessing the player's profile to gather information about their status at the precise moment of the target location. The system can look for flags related to completed quests, unlocked skills, and acquired items that should be present. Retrieving this history is vital for ensuring that the character's capabilities match what the player expects for that specific time. Without this step, the player might find themselves in a later part of the game with starting gear or missing abilities.

In additional embodiments, the process 1600 can then apply delta variables (inventory, health, decisions) to state (block 1650). This involves calculating the differences between the base pinch point state and the specific target moment selected by the user. The system may update the character's health, ammunition count, and inventory slots to reflect the changes that occurred between the anchor point and the jump target. This application of delta variables ensures that the game world reflects the granular choices made by the player. It effectively bridges the gap between the static world data and the dynamic player journey.

In still more embodiments, the process 1600 can determine are dynamic assets required for target scene (decision block 1655). This check allows the system to evaluate if the specific target location involves unique elements not present in the base pinch point data. For example, the target scene might include a specific vehicle, a customized weapon skin, or a unique weather effect. If no such assets are needed, the system can bypass unnecessary loading steps to save time and resources. However, if special elements are detected, the system prepares to fetch them to ensure visual fidelity.

If it is determined that dynamic assets are required, the process 1600 can load cosmetic variable data and injection content (block 1660). This step allows the engine to render personalized details such as player-selected outfits or weapon skins that are specific to the user's profile. Additionally, the system might inject specific content like advertisements or updated news feeds relevant to that timeline segment. Loading this data ensures that the player's unique visual identity is preserved across the timeline jump. This attention to detail helps maintain immersion even after a significant disruption to the gameplay flow.

Regardless of the dynamic asset requirements, the process 1600 can synchronize physics and audio engines (block 1670). This ensures that objects in the world react correctly to gravity and collision immediately upon resumption. The audio engine may also align background music and ambient sound effects to the correct timestamp of the target location. Synchronizing these subsystems prevents jarring visual glitches or audio desyncs when the player regains control. This step acts as a final polish to the reconstructed game state before the player interacts with it.

In a yet further embodiments, the process 1600 can resume gameplay loop at target location (block 1680). This action hands control back to the player, allowing them to move and interact with the world freely. The system may fade in from black or remove a loading overlay to signal that the transition is complete. Resuming the gameplay loop means that the game logic begins processing inputs and AI behaviors in real-time. This final step marks the successful completion of the timeline jump operation.

Although a specific embodiment for a process 1600 for executing a timeline jump and loading associated game assets suitable for carrying out the various steps, processes, methods, and operations described herein is discussed with respect to FIG. 16, any of a variety of systems and/or processes may be utilized in accordance with embodiments of the disclosure. For example, the synchronization step could occur in parallel with the asset loading to further reduce wait times. Additionally, the system might cache the player's previous location before executing the jump, allowing for a quick "undo" action if the player changes their mind. The elements depicted in FIG. 16 may also be interchangeable with other elements of FIGS. 1-15 of the disclosure as required to realize a particularly desired embodiment.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A network device, comprising:
a processor;
at least one network interface controller configured to provide access to a network; and
a memory communicatively coupled to the processor, wherein the memory comprises a timeline control logic that is configured to:
collect player session data comprising at least one of player movement patterns, inventory management decisions, or time spent in specific game zones;
feed the player session data into a trained machine-learning model to generate an optimal restart location prediction within a bi-directional game timeline;
determine if the optimal restart location prediction is within a pre-determined confidence threshold; and
update a timeline association for a player profile to the optimal restart location prediction to facilitate automatic progression management.

2. The network device of claim 1, wherein the timeline control logic is further configured to default to a last known timestamp associated with the player profile in response to the optimal restart location prediction falling below the pre-determined confidence threshold.

3. The network device of claim 1, wherein the timeline control logic is further configured to pre-load a plurality of game assets associated with the optimal restart location prediction in the background while a user navigates a game selection screen.

4. The network device of claim 1, wherein the trained machine-learning model is further configured to utilize a reinforcement learning system to adjust future restart location predictions based on a reinforcement signal received from a critic.

5. The network device of claim 1, wherein the player session data further comprises unlocked inventory items and achievement flags retrieved from a persistent metadata database.

6. The network device of claim 5, wherein the timeline control logic is further configured to correlate the unlocked inventory items with specific timeline milestones to eliminate invalid timeline locations for the optimal restart location prediction.

7. The network device of claim 1, wherein the optimal restart location prediction is adjusted for expositional needs to ensure a player character witnesses a context-establishing scripted event or dialogue upon resuming gameplay.

8. The network device of claim 1, wherein the trained machine-learning model comprises a deep neural network having an input layer, an output layer, and a plurality of hidden layers configured to transform the player session data into abstract feature maps.

9. The network device of claim 1, wherein the timeline control logic is further configured to identify a mandatory pinch point immediately preceding the optimal restart location prediction to establish a stable baseline for a game world environment.

10. The network device of claim 1, wherein updating the timeline association comprises modifying metadata of the player profile such that a continue function automatically bypasses a title screen and resumes gameplay at a constructed state.

11. An interactive game device, comprising:
a processor;
an input/output controller configured to receive user input; and
a memory communicatively coupled to the processor, wherein the memory comprises a timeline control logic that is configured to:
detect a scrubbing input on a bi-directional timeline overlay during gameplay;
determine a target timeline location based on a position of a scrubber icon relative to the bi-directional timeline overlay;
identify a mandatory pinch point located on the bi-directional timeline overlay between a current location and the target timeline location;
generate a pinch point notification informing a player that the target timeline location bypasses a significant story event; and
load a game state at the mandatory pinch point in response to the player declining to confirm a skip of the mandatory pinch point.

12. The interactive game device of claim 11, wherein the timeline control logic is further configured to apply delta variables to a base pinch point state to reconstruct the game state at the target timeline location, the delta variables comprising health, inventory, and environment changes.

13. The interactive game device of claim 11, wherein the pinch point notification comprises a prompt interface providing a choice to either proceed with the target timeline location or cancel navigation to engage with the mandatory pinch point.

14. The interactive game device of claim 11, wherein the timeline control logic is further configured to dynamically adjust the game state to match the target timeline location by resetting character positions, enemy behaviors, and physics simulations.

15. The interactive game device of claim 11, wherein the timeline control logic is further configured to integrate cosmetic variable data during the load of the game state to ensure customized character outfits and equipment skins are accurately reflected in the target timeline location.

16. The interactive game device of claim 11, wherein the bi-directional timeline overlay is configured to visually represent chronological history using markers for key events, cutscenes, and gameplay milestones.

17. The interactive game device of claim 11, wherein the timeline control logic is further configured to synchronize a physics engine and an audio engine to match a timestamp of the target timeline location to prevent visual and audio desynchronization upon resumption.

18. A method of automatic game progression management, comprising:
receiving, by a network device, player session data generated during active gameplay;
processing, by the network device, the player session data using a trained machine-learning model to generate an optimal restart location prediction within a game timeline;
verifying, by the network device, that the optimal restart location prediction meets a confidence threshold; and
updating, by the network device, a player profile to associate a player with the optimal restart location prediction to enable resuming the interactive game at the optimal restart location.

19. The method of claim 18, further comprising recording a current state on the game timeline as a bookmark in response to receiving a confirmation to exit from the player.

20. The method of claim 18, further comprising injecting external content into the game timeline at a specific target location based on injection moment data derived from real-world events.
